(19) Europäisches Patentamt
European Patent Office
Office européen des brevets

(11) **EP 4 711 733 A1**

(12) **EUROPEAN PATENT APPLICATION**
published in accordance with Art. 153(4) EPC

(43) Date of publication:
**18.03.2026 Bulletin 2026/12**

(21) Application number: **24810662.7**

(22) Date of filing: **04.03.2024**

(51) International Patent Classification (IPC):
*G01M 11/00* (2006.01)    *G02B 6/122* (2006.01)
*H01S 5/0683* (2006.01)

(52) Cooperative Patent Classification (CPC):
**G01M 11/00; G02B 6/122; H01S 5/0683**

(86) International application number:
**PCT/JP2024/008100**

(87) International publication number:
**WO 2024/241654 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.05.2023 JP 2023083322**

(71) Applicant: **Hamamatsu Photonics K.K.
Hamamatsu-shi, Shizuoka 435-8558 (JP)**

(72) Inventor: **NAKAMURA, Tomonori
Hamamatsu-shi, Shizuoka 435-8558 (JP)**

(74) Representative: **Hoffmann Eitle
Patent- und Rechtsanwälte PartmbB
Arabellastraße 30
81925 München (DE)**

(54) **INSPECTION DEVICE AND INSPECTION METHOD**

(57)     An inspection apparatus 1 includes a stage 10 holding a PIC 100, a PIC controller 20 controlling an operation of the PIC 100, an LRG filter 61 having a transmission characteristic in which a transmittance varies linearly in a predetermined wavelength range and configured to transmit or reflect light that has been guided by a waveguide 108 and output from at least one optical output unit 102 on the basis of the transmission characteristic, a camera 62 capturing light transmitted through the LRG filter 61 to output a transmission image and capturing light, which has arrived without passing through the LRG filter 61, to output a total light quantity image, and a computer 70 performing a first processing to derive wavelength information of the light output from the optical output unit 102 on the basis of the transmission image and the total light quantity image.

**Fig.1**

## Description

## Technical Field

Technical Field

The present disclosure relates to an inspection apparatus and an inspection method.

## Background Art

In recent years, development of a photonic integrated circuit (PIC: Photonic IC) has been advancing. A photonic integrated circuit is an apparatus that integrates various optical functions and transmits information signals using light. As a method for inspecting a photonic integrated circuit, a method of capturing infrared light scattered by defects in a waveguide in the photonic integrated circuit and displaying the captured image on a display to grasp spatial positions of the defects is known (see, for example, Patent Literature 1).

## Citation List

## Patent Literature

[Patent Literature 1] Japanese Unexamined Patent Publication No. 2022-58070

## Summary of Invention

## Technical Problem

In the inspection method described above, although the spatial positions of defects can be grasped from the captured image, it is not possible to obtain information (for example, wavelength information) on light output from the photonic integrated circuit.
Therefore, there are cases in which proper inspection of photonic integrated circuits cannot be performed.
The present disclosure has been made in view of the above-described circumstances, and relates to an inspection apparatus and an inspection method capable of appropriately inspecting a photonic integrated circuit by acquiring information on light output from the photonic integrated circuit.

## Solution to Problem

An inspection apparatus according to one aspect of the present disclosure is [1] "an inspection apparatus, which is an inspection apparatus inspecting a photonic integrated circuit having at least one optical output unit and a waveguide, including a stage holding the photonic integrated circuit, a control unit controlling an operation of the photonic integrated circuit, an optical filter having a transmission characteristic in which a transmittance varies linearly in a predetermined wavelength range and configured to transmit or reflect light that has been guided by the waveguide and output from the at least one optical output unit on the basis of the transmission characteristic, an imaging unit capturing light transmitted through or reflected by the optical filter to output first image data and capturing light output from the optical output unit which has arrived without passing through the optical filter to output second image data, and an analysis unit performing a first processing to derive wavelength information of the light output from the optical output unit on the basis of the first image data and the second image data".
In the inspection apparatus according to one aspect of the present disclosure, light output from the optical output unit of the photonic integrated circuit is transmitted through or reflected by the optical filter according to a wavelength thereof. The wavelength information of the light output from the optical output unit is derived on the basis of the first image data obtained by capturing the light transmitted through or reflected by the optical filter and the second image data obtained by capturing the light which has arrived without passing through the optical filter. In this manner, in the inspection apparatus according to one aspect of the present disclosure, since the optical filter is used to transmit or reflect light according to the wavelength, the first image data serves as image data according to the wavelength of the light. Also, since the first image data is image data obtained by capturing the light transmitted through or reflected by the optical filter, and the second image data is image data obtained by capturing the light which has arrived without passing through the optical filter, it is possible to acquire information, from these image data, about the light transmitted through the optical filter and about the light reflected by the optical filter. When information about the light that has been transmitted or reflected according to the wavelength is acquired in this way, the wavelength information of the light can be acquired with high accuracy. As described above, according to the inspection apparatus of one aspect of the present invention, it is possible to acquire information (specifically, wavelength information) of the light output from the photonic integrated circuit, and as a result, the photonic integrated circuit can be appropriately inspected using the wavelength information.

The inspection apparatus according to one aspect of the present disclosure may be [2] "the inspection apparatus according to the above-described [1], in which the photonic integrated circuit includes a plurality of optical output units, and the optical filter transmits or reflects each light output from the plurality of optical output units on the basis of the transmission characteristic". According to such a configuration, the wavelength information of the light from the plurality of optical output units, which are provided at spatially different positions from each other, can be collectively acquired, allowing the photonic integrated circuits to be inspected more quickly and appropriately.

The inspection apparatus according to one aspect of the present disclosure may be [3] "the inspection apparatus according to the above-described [1] or [2], in which the imaging unit includes an image sensor capturing the light transmitted through or reflected by the optical filter and capturing the light output from the optical output unit which has arrived without passing through the optical filter". According to such an image sensor, it is possible to appropriately capture desired light.

The inspection apparatus according to one aspect of the present disclosure may be [4] "the inspection apparatus according to any one of the above-described [1] to [3], further including a switching unit configured to be able to switch between a state in which the optical filter is provided in an optical path between the optical output unit and the imaging unit and a state in which the optical filter is not provided". According to such a configuration, it is possible to appropriately acquire both the first image data and the second image data described above while switching between the presence and absence of the optical filter.

The inspection apparatus according to one aspect of the present disclosure may be [5] "the inspection apparatus according to any one of the above-described [1] to [4], in which the imaging unit includes a light branching portion branching the light output from the optical output unit into a first branched optical path and a second branched optical path, a first image sensor disposed in the first branched optical path, and a second image sensor disposed in the second branched optical path, the optical filter is disposed between the light branching portion on the first branched optical path and the first image sensor, the first image sensor captures the light transmitted through or reflected by the optical filter to output the first image data, and the second image sensor captures the light output from the optical output unit which has arrived without passing through the optical filter to output the second image data". According to such a configuration, when the light is branched into the first branched optical path and the second branched optical path by the light branching portion, it is possible to simultaneously acquire the above-described first image data and second image data, thereby enabling efficient inspection.

The inspection apparatus according to one aspect of the present disclosure may be [6] "the inspection apparatus according to any one of the above-described [1] to [5], in which the control unit controls a temperature of at least a part of the photonic integrated circuit". When a temperature of the photonic integrated circuit is controlled in this way, a characteristic of the waveguide in the photonic integrated circuit can be controlled, thereby enabling, for example, adjustment of the wavelength of the light output from the optical output unit. This allows the photonic integrated circuit to be appropriately inspected while easily changing wavelength conditions of the light.

The inspection apparatus according to one aspect of the present disclosure may be [7] "the inspection apparatus according to any one of the above-described [1] to [6], in which the photonic integrated circuit has at least one optical input unit, and the optical output unit outputs light input from the optical input unit and guided by the waveguide". According to such a configuration, it is possible to appropriately acquire wavelength information of the light that is input from the optical input unit of the photonic integrated circuit, passes through the waveguide, and is output from the optical output unit.

The inspection apparatus according to one aspect of the present disclosure may be [8] "the inspection apparatus according to any one of the above-described [1] to [7], further including a first optical scanner unit performing optical scanning on a first region of the photonic integrated circuit on which the optical input unit is formed and configured to detect light related to the optical scanning, in which the analysis unit further performs a second processing to preliminarily determine a position of the optical input unit into which light is input when the first processing is performed, and, in the second processing, determines the position of the optical input unit on the basis of an intensity of light detected by the first optical scanner unit". According to such a configuration, the position of the optical input unit can be determined from a difference in light intensity, and the subsequent first processing (processing of deriving wavelength information of the light output from the optical output unit) can be appropriately performed.

The inspection apparatus according to one aspect of the present disclosure may be [9] "the inspection apparatus according to any one of the above-described [1] to [8], further including a second optical scanner unit performing optical scanning on a second region of the photonic integrated circuit on which the optical output unit is formed and configured to detect light related to the optical scanning, in which the analysis unit further performs a third processing to preliminarily determine a position of the optical output unit which outputs light when the first processing is performed, and, in the third processing, determines the position of the optical output unit on the basis of an intensity of light detected by the second optical scanner unit". According to such a configuration, the position of the optical output unit can be determined from a difference in light intensity, and the subsequent first processing (processing of deriving wavelength information of the light output from the optical output unit) can be appropriately performed.

The inspection apparatus according to one aspect of the present disclosure may be [10] "the inspection apparatus according to any one of the above-described [1] to [9], in which in the first processing, the analysis unit derives a transmission intensity, which is an intensity of the light transmitted through the optical filter, from the first image data, derives a total intensity of the light output from the optical output unit from the second image data, derives a reflection intensity, which is an intensity of the light reflected by the optical filter, on the basis of the transmission intensity and the total intensity, and derives the wavelength information on the basis of the transmission intensity and the reflection intensity". Since light is transmitted or reflected according to the wavelength in the optical filter, the wavelength information can be derived with high accuracy from the information on the transmission intensity (transmitted light quantity) and the reflection intensity (reflected light quantity).

The inspection apparatus according to one aspect of the present disclosure may be [11] "the inspection apparatus according to any one of the above-described [1] to [9], in which in the first processing, the analysis unit derives a reflection intensity, which is an intensity of the light reflected by the optical filter, from the first image data, derives a total intensity of the light output from the optical output unit from the second image data, derives a transmission intensity, which is an intensity of the light transmitted through the optical filter, on the basis of the reflection intensity and the total intensity, and derives the wavelength information on the basis of the transmission intensity and the reflection intensity". Since light is transmitted or reflected according to the wavelength in the optical filter, the wavelength information can be derived with high accuracy from the information on the transmission intensity (transmitted light quantity) and the reflection intensity (reflected light quantity).

The inspection apparatus according to one aspect of the present disclosure may be [12] "the inspection apparatus according to the above-described [10] or [11], in which the analysis unit derives a difference value between the transmission intensity and the reflection intensity and derives the wavelength information on the basis of the difference value". The wavelength information can be derived with high accuracy by deriving the wavelength information from the difference value between the transmission intensity and the reflection intensity.

The inspection apparatus according to one aspect of the present disclosure may be [13] "the inspection apparatus according to any one of the above-described [1] to [12], in which the wavelength information is information indicating a centroid wavelength of the light output from the optical output unit". Thereby, the wavelength information can be appropriately derived.

The inspection apparatus according to one aspect of the present disclosure may be [14] "the inspection apparatus according to any one of the above-described [1] to [13], in which the analysis unit further performs a fourth processing to create a table showing a relationship between the wavelength information and a temperature control of the photonic integrated circuit by associating the wavelength information derived in the first processing with information related to the temperature control of the photonic integrated circuit by the control unit when the wavelength information was derived". According to such a configuration, it is possible to create a table for temperature control when the wavelength of the photonic integrated circuit is adjusted, making it easier to control the photonic integrated circuit.

An inspection method according to one aspect of the present disclosure is [15] "an inspection method, which is an inspection method of inspecting a photonic integrated circuit having at least one optical output unit and a waveguide, including controlling an operation of the photonic integrated circuit, transmitting or reflecting, on the basis of a transmission characteristic, light that has been guided by the waveguide and output from the at least one optical output unit by an optical filter having the transmission characteristic in which a transmittance varies linearly in a predetermined wavelength range, capturing the light transmitted through or reflected by the optical filter to output first image data, capturing light output from the optical output unit which has arrived without passing through the optical filter to output second image data, and deriving wavelength information of the light output from the optical output unit on the basis of the first image data and the second image data.

**Advantageous Effects of Invention**

According to the present disclosure, a photonic integrated circuit can be appropriately inspected by acquiring information on light output from the photonic integrated circuit.

**Brief Description of Drawings**

FIG. 1 is a side view schematically illustrating an inspection apparatus according to a first embodiment of the present disclosure.
FIG. 2 is a plan view schematically illustrating a PIC.

FIG. 3(a) is a side view of the PIC on an input end surface side, and FIG. 3(b) is a side view of the PIC on an output end surface side.

FIG. 4 is a diagram illustrating a spectrum of light and characteristics of an LRG filter.

FIG. 5 is a side view illustrating details of the inspection apparatus illustrated in FIG. 1.

FIGS. 6(a) to 6(c) are views illustrating a setting step.

FIG. 7 is a view illustrating the setting step.

FIG. 8 is a view illustrating a step of roughly determining a position of a optical input unit.

FIG. 9 is a view illustrating the step of roughly determining a position of the optical input unit.

FIG. 10 is a view illustrating the step of roughly determining a position of the optical input unit.

FIG. 11 is a view illustrating a step of roughly determining a position of a optical output unit.

FIG. 12 is a view illustrating the step of roughly determining a position of the optical output unit.

FIG. 13 is a view illustrating the step of roughly determining a position of the optical output unit.

FIG. 14 is a view illustrating a step of determining a position of the optical input unit with high accuracy and a step of determining a position of the optical output unit with high accuracy.

FIG. 15 is a view illustrating the step of determining a position of the optical input unit with high accuracy.

FIG. 16 is a view illustrating the step of determining a position of the optical output unit with high accuracy.

FIG. 17 is a view illustrating a step of deriving wavelength information.

FIG. 18 is a view illustrating the step of deriving wavelength information.

FIG. 19 is a view illustrating the step of deriving wavelength information.

FIG. 20 is a diagram showing an example of a relationship between a heater input power and a wavelength shift amount.

FIG. 21 is a flowchart of an inspection method.

FIG. 22 is a side view schematically illustrating an inspection apparatus according to a second embodiment of the present disclosure.

FIG. 23 is a view illustrating a step of determining a position of a grating with high accuracy.

FIG. 24 is a view illustrating the step of determining a position of the grating with high accuracy.

FIG. 25 is a view illustrating a step of deriving wavelength information.

FIG. 26 is a view illustrating a step of deriving wavelength information in a third embodiment of the present disclosure.

FIG. 27 is a view illustrating the step of deriving wavelength information.

FIGS. 28(a) and 28(b) are views illustrating an imaging mechanism according to a first modified example.

FIGS. 29(a) and 29(b) are views illustrating an imaging mechanism according to a second modified example.

FIGS. 30(a) and 30(b) are views illustrating an imaging mechanism according to a third modified example.

FIG. 31 is a view illustrating an imaging mechanism according to a fourth modified example.

**Description of Embodiments**

Hereinafter, embodiments will be described in detail with reference to the drawings. In each of the drawings, the same or corresponding parts are denoted by the same reference signs, and redundant descriptions will be omitted.

[First embodiment]

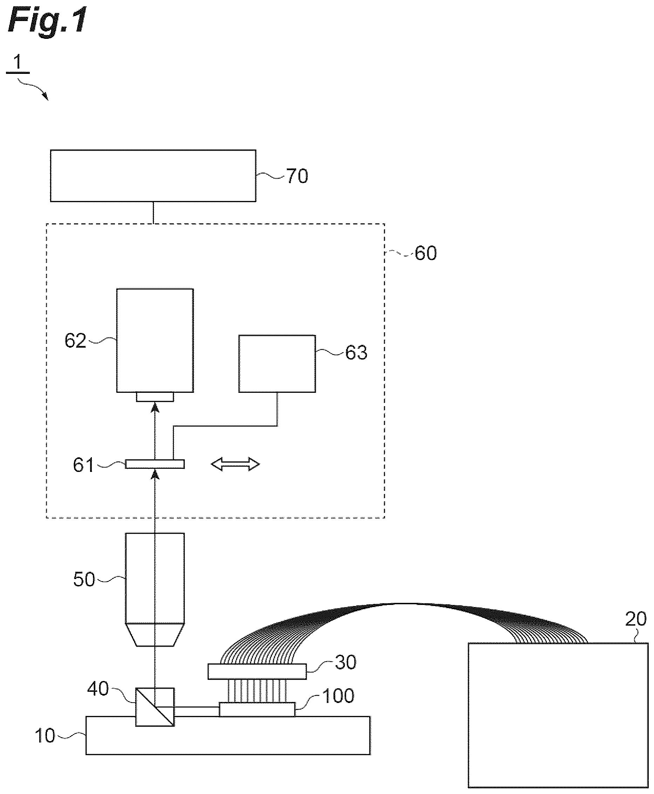

FIG. 1 is a side view schematically illustrating an inspection apparatus 1 according to a first embodiment. The inspection apparatus 1 is an apparatus for inspecting a photonic integrated circuit (PIC: Photonic IC) 100. The PIC 100 is a circuit in which a plurality of photonic components such as a waveguide, a laser element, a modulator, and a detector are integrated in a single chip. Compared to conventional integrated circuits such as silicon ICs, the PIC 100 is excellent in high speed, wide bandwidth, and power efficiency. Also, the term "inspection" here not only refers to checking for any abnormalities (defects) in the PIC 100, but may also include, for example, generating information necessary for controlling the PIC 100. The inspection apparatus 1 detects light output from the PIC 100, derives wavelength information of the light, and inspects the PIC 100 using the wavelength information. When the wavelength information of the light output from the PIC 100 is derived, it is possible to inspect whether light of a desired wavelength is being output (channel accuracy, stability of light output), whether there are any electrical or optical connection problems in the laser elements within the PIC 100, whether there are any defects in the waveguides within the PIC 100 (presence of light leakage, degree of light leakage), whether optical transmission characteristics of the waveguides (wavelength-transmittance) are appropriate), and the like.

The inspection apparatus 1 transmits or reflects light from the PIC 100 according to a wavelength component thereof, and captures the transmitted or reflected light to acquire an image (first image data). Also, the inspection apparatus 1 captures the light output from the PIC 100 to acquire an image (second image data). Then, the inspection apparatus 1 derives the wavelength information of the light output from the PIC 100 on the basis of the above-described two images (details will be described later).

As illustrated in FIG. 1, the inspection apparatus 1 includes a stage 10, a PIC controller 20 (control unit), a probe card 30, a mirror 40, a condenser lens 50, an imaging mechanism 60, and a computer 70 (analysis unit).

The stage 10 places and holds the PIC 100. The stage 10 may be an XYZ stage configured to be able to move the PIC 100 in an XYZ direction (front-rear, left-right, and vertical directions). A position of the PIC 100 may be adjusted by the XYZ stage, and focus adjustment may also be performed.

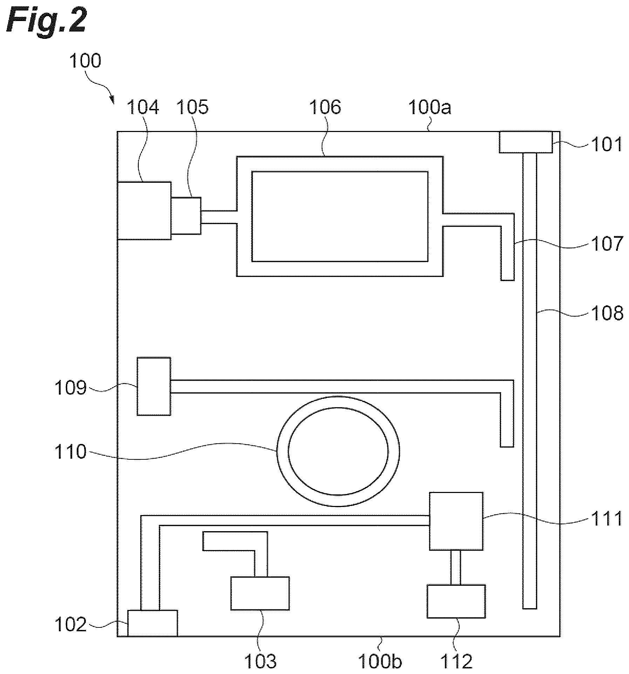

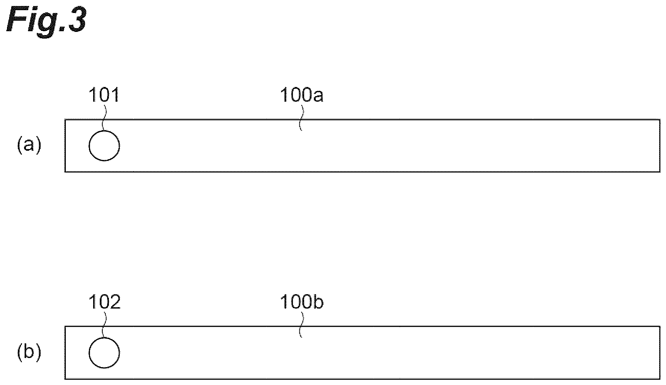

FIG. 2 is a plan view schematically illustrating the PIC 100. FIG. 3(a) is a side view of the PIC 100 on an input end surface 100a side, and FIG. 3(b) is a side view of the PIC 100 on an output end surface 100b side. The PIC 100 is an apparatus that integrates various optical functions and transmits information signals using light. As illustrated in FIG. 2, the PIC 100 is configured to include various elements. In the example illustrated in FIG. 2, the PIC 100 includes an optical input unit 101, an optical output unit 102, a grating 103, a laser element 104, an input coupler 105, an optical modulator 106, an optical coupler 107, a waveguide 108, photodiodes 109 and 112, an optical ring resonant circuit 110, a photonic crystal 111, and the like. The PIC 100 includes at least one optical output unit and a waveguide.

The optical input unit 101 is a portion through which light is input from the outside of the PIC 100 to the inside of the PIC 100. The optical input unit 101 is formed on the input end surface 100a which is one side surface of the PIC 100 as illustrated in FIG. 3(a). In FIG. 3(a), only one optical input unit 101 is illustrated, but a plurality of optical input units 101 are formed on the input end surface 100a. For example, in a state of practical use after inspection, an optical cable is connected to the optical input unit 101.

The optical output unit 102 is a portion through which light is output to the outside of the PIC 100. The optical output unit 102 is formed on the output end surface 100b which is the other end surface of the PIC 100 as illustrated in FIG. 3(b). In FIG. 3(b), only one optical output unit 102 is illustrated, but a plurality of optical output units 102 are formed on the output end surface 100b. For example, in a state of practical use after inspection, an optical cable is connected to the optical output unit 102. The optical output unit 102 may output light input from the optical input unit 101 and guided by the waveguide 108 to the outside of the PIC 100.

The grating 103 is disposed on a front surface (upper surface) of the PIC 100 and functions as an optical output unit that outputs light upward (toward the outside the PIC 100). The laser element 104 is a light source that emits laser light inside the PIC 100. The light emitted from the laser element 104 passes through the input coupler 105 and the optical modulator 106 to reach the optical coupler 107, and is guided by the waveguide 108.

The photodiodes 109 and 112 are photodetectors provided inside the PIC 100. The optical ring resonant circuit 110 is a circuit that sets a resonance wavelength. The photonic crystal 111 is a structure in which a refractive index changes periodically, and is a structure that confines light in a small region to manipulate the light. Further, the PIC 100 may include not only the components (elements) described above but also various other elements. The PIC 100 may have microheaters (not illustrated) mounted on elements such as, for example, the optical ring resonant circuit 110, an optical modulator, and the like. The microheater is configured to change a refractive index of the waveguide that constitutes each element of the optical ring resonant circuit 110, the optical modulator, or the like, thereby controlling the resonance wavelength of the light being guided.

Returning to FIG. 1, the PIC controller 20 is a control unit for controlling an operation of each element in the PIC 100 which is an object to be inspected. The PIC controller 20 is electrically connected to the PIC 100 via the probe card 30. The PIC controller 20 supplies power to a light emitting element (for example, the laser element 104, an amplification element, or the like). The PIC controller 20 supplies modulation signals to optical modulators (such as amplification-element-type modulators, electro-absorption modulators, depletion-layer-type modulators, and ring modulators). The modulation signal here is, for example, a signal related to modulation of light intensity or a signal related to switching of an optical switch. The PIC controller 20 supplies power to the microheaters and controls a temperature of at least a part of the PIC 100. Thereby, a refractive index of light guided in the waveguide 108 is controlled, and a resonator length in the optical ring resonant circuit 110 is controlled. The PIC controller 20 supplies power to the photodiodes 109 and 112. The PIC controller 20 measures a temperature of the PIC 100. Temperature measurement may be performed by resistance measurement using a resistive element or by voltage measurement using a thermocouple. Also, the PIC controller 20 may also control an IC portion mounted on the PIC 100 or may also perform emission wavelength measurement. These functions may be performed by an external apparatus other than the PIC controller 20.

The mirror 40 is a mirror that reflects the light from the PIC 100 in a direction of the condenser lens 50. The condenser lens 50 is, for example, an objective lens and is a lens that focuses light in a direction of the imaging mechanism 60.

The imaging mechanism 60 is configured to include an LRG (Liner Reflectance Gradient on the wavelength axis) filter 61 (optical filter), a camera 62 (image sensor, imaging unit), and a switching unit 63.

The LRG filter 61 is a filter made of a special optical material and separates the light from the PIC 100 by transmitting or reflecting the light according to a wavelength thereof. The LRG filter 61 has a transmission characteristic in which a transmittance varies linearly in a predetermined wavelength range, and transmits or reflects the light guided by the waveguide 108 and output from the optical output unit 102 on the basis of the above-described transmission characteristic.

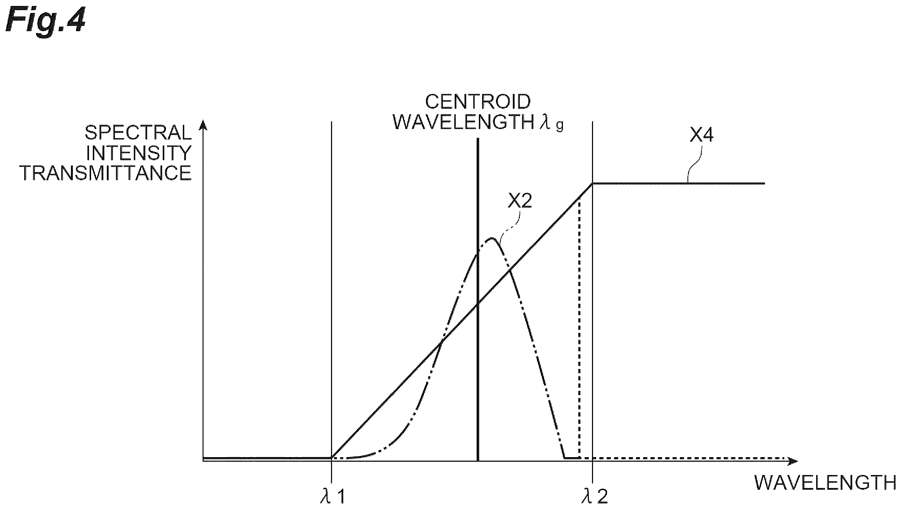

FIG. 4 is a diagram illustrating a spectrum of light and characteristics of the LRG filter 61. In FIG. 4, the horizontal axis represents a wavelength, and the vertical axis represents spectral intensity (in a case of an optical spectrum) and transmittance (in a case of the LRG filter 61). As shown in the characteristic X4 of the LRG filter 61 in FIG. 4, in the LRG filter 61, in a predetermined wavelength range (wavelength band of wavelengths λ1 to λ2), a light transmittance (and a reflectance) changes gradually in response to changes in wavelength, and in a wavelength band other than the predetermined wavelength range (that is, at wavelengths shorter than the wavelength λ1 and at wavelengths longer than the wavelength λ2), the light transmittance (and the reflectance) is constant regardless of changes in wavelength. In other words, in the predetermined wavelength range (the wavelength band of the wavelengths λ1 to λ2), the light transmittance changes in a monotonically increasing manner (the reflectance changes in a monotonically decreasing manner) with changes in wavelength. Since transmittance and reflectance have a negative correlation, that is, when one changes in an increasing direction, the other changes in a decreasing direction, in the following description, they may be referred to simply as "transmittance" rather than "transmittance (and reflectance)". Further, the phrase "the light transmittance is constant regardless of changes in wavelength" not only refers to a case in which the transmittance is completely constant, but also includes a case in which a change in transmittance for a change in wavelength of 1 nm is 0.1% or less. At wavelengths shorter than the wavelength λ1, the light transmittance is approximately 0% regardless of changes in wavelength, while at wavelengths longer than the wavelength λ2, the light transmittance is approximately 100% regardless of changes in wavelength. Further, the phrase "the light transmittance is approximately 0%" includes transmittance values of around 0% plus up to about 10%, and "the light transmittance is approximately 100%" includes transmittance values of around 100% minus up to about 10%. As described above, the LRG filter 61 is a wavelength-separating optical element that has a wavelength band of a predetermined width (width of the wavelengths λ1 to λ2) in which the transmittance changes according to changes in wavelength.

Returning to FIG. 1, the camera 62 captures the light transmitted through the LRG filter 61 to output the transmission image (first image data). Also, the camera 62 captures the light output from the optical output unit 102 which has arrived without passing through the LRG filter 61 to output a total light quantity image (second image data). As described above, the camera 62 performs a first imaging in which it captures the light transmitted through the LRG filter 61, and performs a second imaging in which it captures the light which has arrived without passing through the LRG filter 61. The first imaging and the second imaging are switched by changing a position of the LRG filter 61 using the switching unit 63 to be described later. Further, instead of the camera 62, an area image sensor such as CCD or MOS may be used, respectively, or a line sensor or a time delay integration (TDI) sensor may be used.

The switching unit 63 is configured to be able to switch between a state in which the LRG filter 61 is provided in the optical path between the optical output unit 102 and the camera 62 (a state for performing the above-described first imaging) and a state in which the LRG filter 61 is not provided (a state for performing the above-described second imaging). The switching unit 63 achieves the above-described switching by moving the LRG filter 61 (changing the position of the LRG filter 61). That is, when the first imaging described above is performed, the switching unit 63 moves the LRG filter 61 so that the LRG filter 61 is positioned in the optical path between the optical output unit 102 and the camera 62 and the light transmitted through the LRG filter 61 is imaged by the camera 62. Also, when the second imaging described above is performed, the switching unit 63 moves the LRG filter 61 so that the LRG filter 61 is not positioned in the optical path between the optical output unit 102 and the camera 62, and the light which has arrived without passing through the LRG filter 61 is imaged by the camera 62. The switching unit 63 may be, for example, a filter wheel or a filter slide.

Physically, the computer 70 is configured to include a memory such as a RAM and a ROM, a processor (an arithmetic circuit) such as a CPU, a communication interface, and a storage portion such as a hard disk. The computer 70 functions by executing a program stored in the memory using the CPU. The computer 70 may also be configured using a microcontroller or an FPGA.

The computer 70 performs a first processing to derive the wavelength information of the light output from the optical output unit 102 of the PIC 100 on the basis of the transmission image and the total light quantity image described above. In the first processing, the computer 70 derives a transmission intensity (transmitted light quantity), which is an intensity of the light transmitted through the LRG filter 61, on the basis of the transmission image, and derives a total intensity of the light output from the optical output unit 102 on the basis of the total light quantity image. Then, the computer 70 derives a reflection intensity (reflected light quantity), which is an intensity of light reflected by the LRG filter 61, on the basis of the transmission intensity and the total intensity specifically by subtracting the transmission intensity from the total intensity. For example, assuming that the transmission intensity is T, the reflection intensity is R, the total light quantity is A, and a difference value between the transmission intensity T and the reflection intensity R is D, $R = A - T$ and $D = 2T - A$ hold true. The computer 70 derives wavelength information on the basis of the transmitted light quantity and the reflected light quantity. The computer 70 derives a difference value between the transmitted light quantity and the reflected light quantity, and derives wavelength information on the basis of the difference value. The term "wavelength information" here refers to information indicating a centroid wavelength of the light output from the optical output unit 102. Also, the transmission intensity (transmitted light quantity) may also be an integrated value of intensities in a region of the image corresponding to the optical output unit 102 in the transmission image. Also, the total intensity (total light quantity) may also be an integrated value of the intensities in the region of the image corresponding to the optical output unit 102 in the total light quantity image.

In this case, the reflection intensity (reflected light quantity) derived by the calculation is obtained as the integrated value of the intensities in the region of the image corresponding to the optical output unit 102. Further, the transmission intensity (transmitted light quantity) may be an intensity of each pixel constituting the region of the image corresponding to the optical output unit 102 in the transmission image. Also, the total intensity (total light quantity) may also be an intensity of each pixel constituting the region of the image corresponding to the optical output unit 102 in the total light quantity image. In this case, the reflection intensity (reflected light quantity) derived by the calculation is obtained as the intensity of each pixel constituting the region of the image corresponding to the optical output unit 102. Hereinafter, an example of a calculation principle of the centroid wavelength will be described in detail with reference to FIG. 4.

As described above, the LRG filter 61 is assumed to reflect all light at wavelengths shorter than the wavelength $\lambda 1$, to transmit all light at wavelengths longer than the wavelength $\lambda 2$, and to have a light transmittance that changes linearly with wavelength in the wavelength band of the wavelengths $\lambda 1$ to $\lambda 2$. In this case, a transmittance $h(\lambda)$ in relation to the wavelengths $\lambda 1$ and $\lambda 2$ is expressed by expression (1) below, and a reflectance $1-h(\lambda)$ is expressed by expression (2) below.

$$h(\lambda) = (\lambda - \lambda 1)/(\lambda 2 - \lambda 1) \ (1)$$

$$1 - h(\lambda) = (\lambda 2 - \lambda)/(\lambda 2 - \lambda 1) \ (2)$$

Also, it is apparent that a wavelength $\lambda 50\%$, at which the reflectance becomes 50%, is expressed by expression (3) below.

$$\lambda 50\% = (\lambda 2 + \lambda 1)/2 \ (3)$$

When a spectrum $f(\lambda)$ is represented by the waveform X2 in FIG. 4, lies between $\lambda 1$ and $\lambda 2$, and is negligible at wavelengths shorter than $\lambda 1$ and longer than $\lambda 2$, and assuming that the reflected light quantity and the transmitted light quantity are equal, expression (4) below holds.

$$\int f(\lambda)h(\lambda)d\lambda = \int f(\lambda)(1-h(\lambda))d\lambda \ (4)$$

When expression (4) is transformed, expression (5) is obtained as shown below.

$$2\int f(\lambda)h(\lambda)d\lambda = \int f(\lambda)d\lambda \ (5)$$

If expression (1) is substituted into expression (5),

$$2\int f(\lambda)(\lambda - \lambda 1)/(\lambda 2 - \lambda 1)d\lambda = \int f(\lambda)d\lambda$$

and if both sides are further divided by $2\int f(\lambda)d\lambda/(\lambda 2 - \lambda 1)$,

$$\int f(\lambda)(\lambda - \lambda 1)d\lambda/\int f(\lambda)d\lambda = (\lambda 2 - \lambda 1)/2$$

$$\int f(\lambda)\lambda d\lambda/\int f(\lambda)d\lambda = (\lambda 2 + \lambda 1)/2 \ (6)$$

Considering expression (3), it is apparent that the right-hand side of expression (6) is $\lambda 50\%$ and the left-hand side is a centroid of $f(\lambda)$ which is generally an arbitrary function. The left-hand side of such expression (6) is assumed to be $\lambda f$. From the above, for an arbitrary spectrum that has passed through the LRG filter 61 whose transmittance changes linearly with wavelength, if the transmitted light quantity and the reflected light quantity are equal, the centroid $\lambda f$ of the spectrum is indicated as $\lambda 50\%$.

Next, a second spectrum $g(\lambda)$ will be considered. For the spectrum $g(\lambda)$ as well, the spectrum is entirely contained between $\lambda 1$ and $\lambda 2$. Now, for the spectra $f(\lambda)$ and $g(\lambda)$, a difference between normalized difference values of the transmitted light and the reflected light is calculated. For the spectrum $f(\lambda)$, let the transmitted light be denoted by Tf, the reflected light be denoted by Rf, the total light quantity be denoted by Af, and the difference between the transmitted light and the reflected light be denoted by Df. Also, for the spectrum g($\lambda$), let the transmitted light be denoted by Tg, the reflected light be denoted by Rg, the total light quantity be denoted by Ag, and the difference between the transmitted light and the reflected light be denoted by Dg. Also, let a centroid of g($\lambda$) be denoted as $\lambda$g. At this time, Tf, Rf, Tg, and Rg are measured values, and Af, Ag, Df, and Dg are values that can be directly calculated from the measured values. These values are also expressed by the following expressions.

$$Tf = \int f(\lambda)h(\lambda)d\lambda = \int f(\lambda)(\lambda-\lambda1)/(\lambda2-\lambda1)d\lambda \quad (7)$$

$$Tg = \int g(\lambda)h(\lambda)d\lambda = \int g(\lambda)(\lambda-\lambda1)/(\lambda2-\lambda1)d\lambda \quad (8)$$

$$Rf = \int f(\lambda)(1-h(\lambda))d\lambda = \int f(\lambda)(\lambda2-\lambda)/(\lambda2-\lambda1)d\lambda \quad (9)$$

$$Rg = \int g(\lambda)(1-h(\lambda))d\lambda = \int g(\lambda)(\lambda2-\lambda)/(\lambda2-\lambda1)d\lambda \quad (10)$$

$$Af = \int f(\lambda)d\lambda \quad (11)$$

$$Ag = \int g(\lambda)d\lambda \quad (12)$$

$$Df = Tf-Rf$$
$$= 2/(\lambda2-\lambda1)*\int \lambda f(\lambda)d\lambda-(\lambda2+\lambda1)/(\lambda2-\lambda1)*\int f(\lambda)d\lambda \quad (13)$$

$$Dg = Tg-Rg$$
$$= 2/(\lambda2-\lambda1)*\int \lambda g(\lambda)d\lambda-(\lambda2+\lambda1)/(\lambda2-\lambda1)*\int g(\lambda)d\lambda \quad (14)$$

Here, the phrase "normalizing the difference value between the transmitted light and the reflected light" corresponds to dividing Df by Af and Dg by Ag. If the difference between them is denoted by R, the following expression (15) holds.

$$R = Dg/Ag-Df/Af$$
$$= \{\int g(\lambda)\lambda d\lambda/\int g(\lambda)d\lambda-\int f(\lambda)\lambda d\lambda/\int f(\lambda)d\lambda\}*2/(\lambda2-\lambda1)$$
$$= 2(\lambda g-\lambda f)/(\lambda2-\lambda1) \quad (15)$$

If a difference between the centroid wavelength $\lambda$f of the spectrum f ($\lambda$) and a centroid wavelength $\lambda$g of the spectrum g ($\lambda$) is denoted by $\delta\lambda$, the following expressions (16) and (17) hold.

$$R = 2\delta\lambda/(\lambda2-\lambda1) \quad (16)$$

$$\delta\lambda = R(\lambda2-\lambda1)/2 \quad (17)$$

As described above, it has been shown that the difference in centroid of two arbitrary spectra f($\lambda$) and g($\lambda$) can be obtained from calculations taking into account the transmitted light quantity and the reflected light quantity.

Then, when the centroid of f($\lambda$) is $\lambda$50%, the reflected light quantity and the transmitted light quantity become equal, resulting in Df being zero. That is, the centroid wavelength $\lambda$g of an arbitrary spectrum g($\lambda$) is expressed by the following expression (18).

$$\lambda g = \delta\lambda + \lambda 50\% \quad (18)$$

As described above, the centroid wavelength of the spectrum (that is, wavelength information of the light) can be calculated from a design value of the LRG filter 61, the transmitted light quantity, and the reflected light quantity. Then, in the inspection apparatus 1, as described above, the PIC 100 is inspected using the centroid wavelength (wavelength information).

Also, the centroid wavelength $\lambda g$ of an arbitrary spectrum $g(\lambda)$ can also be determined using the following expressions (19) and (20). In this case, a transmitted light Tg, a reflected light Rg, a total light Ag, and the centroid $\lambda g$ of $g(\lambda)$ are defined by expressions (21), (22), (23), and (24), respectively. Further, expression (21) is equivalent to expression (8) described above, expression (22) is equivalent to expression (10) described above, expression (23) is equivalent to expression (12) described above, and expression (24) is equivalent to expression (18) described above.

[Math. 1]

$$\frac{T_g - R_g}{T_g + R_g} = \frac{T_g - R_g}{A_g} = \frac{2T_g - A_g}{A_g} = \frac{A_g - 2R_g}{A_g}$$

$$= \frac{\int_{\lambda_1}^{\lambda_2} \frac{2\lambda - (\lambda_1 + \lambda_2)}{\lambda_2 - \lambda_1} g(\lambda) d\lambda}{A_g}$$

$$= \frac{\int_{\lambda_1}^{\lambda_2} \frac{2(\lambda - \lambda_{50\%})}{\lambda_2 - \lambda_1} g(\lambda) d\lambda}{A_g}$$

$$= \frac{\frac{2}{\lambda_2 - \lambda_1} \left\{ \int_{\lambda_1}^{\lambda_2} \lambda g(\lambda) d\lambda - \lambda_{50\%} \int_{\lambda_1}^{\lambda_2} g(\lambda) d\lambda \right\}}{A_g}$$

$$= \frac{2}{\lambda_2 - \lambda_1} (\lambda_g - \lambda_{50\%}) \qquad (19)$$

$$\lambda_g = \frac{\lambda_2 - \lambda_1}{2} \left( \frac{T_g - R_g}{T_g + R_g} \right) + \lambda_{50\%} \qquad (20)$$

$$T_g = \int_{\lambda_1}^{\lambda_2} \frac{\lambda - \lambda_1}{\lambda_2 - \lambda_1} g(\lambda) d\lambda \quad (21)$$

$$R_g = \int_{\lambda_1}^{\lambda_2} \frac{\lambda_2 - \lambda}{\lambda_2 - \lambda_1} g(\lambda) d\lambda \quad (22)$$

$$A_g = T_g + R_g = \int_{\lambda_1}^{\lambda_2} g(\lambda) d\lambda \quad (23)$$

$$\lambda_g = \frac{\int_{\lambda_1}^{\lambda_2} \lambda g(\lambda) d\lambda}{\int_{\lambda_1}^{\lambda_2} g(\lambda) d\lambda} = \frac{\int_{\lambda_1}^{\lambda_2} \lambda g(\lambda) d\lambda}{A_g} \quad (24)$$

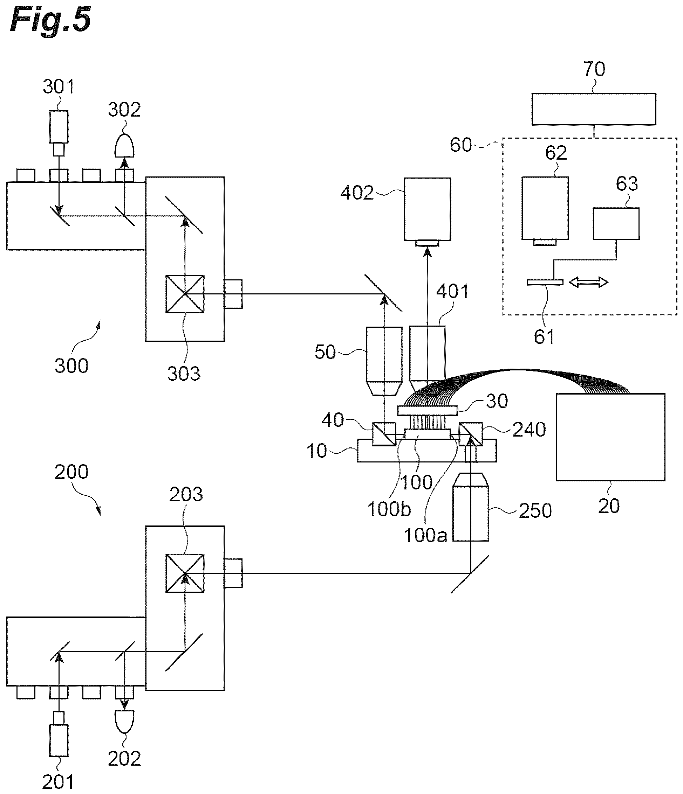

Next, steps of an inspection method performed using the inspection apparatus 1 will be described with reference to FIGS. 5 to 20. The present inspection method largely includes a preliminary preparation step and a step of deriving wavelength information. The preliminary preparation step includes a setting step, a step of roughly determining a position of the optical input unit 101, a step of roughly determining a position of the optical output unit 102, a step of determining the position of the optical input unit 101 with high accuracy, and a step of determining the position of the optical output unit 102 with high accuracy.

The inspection apparatus 1 that performs the above-described steps has a configuration illustrated in FIG. 5 in detail. FIG. 5 is a side view illustrating details of the inspection apparatus 1 illustrated in FIG. 1. As illustrated in FIG. 5, the inspection apparatus 1 is configured to include, in addition to the components illustrated in FIG. 1, a first scanner unit 200 (first optical scanner unit), a second scanner unit 300 (second optical scanner unit), a condenser lens 401, and an observation camera 402. The condenser lens 401 and the observation camera 402 are components used in the preliminary preparation step.

The first scanner unit 200 is configured to perform optical scanning on the input end surface 100a (first region) of the PIC 100, on which the plurality of optical input units 101 are formed, and detect light related to the optical scanning (specifically, light reflected at the input end surface 100a).

The first scanner unit 200 is configured to include a laser light source 201, a photodiode 202, a galvanometer mirror 203, a mirror 240, and a condenser lens 250. The laser light source 201 is a light source emitting laser light. The galvanometer mirror (optical scanner) 203 is an optical scanner that reflects the light emitted from the laser light source 201 in an arbitrary direction, thereby achieving optical scanning on the input end surface 100a. The condenser lens 250 is, for example, an objective lens and focuses the light onto the mirror 240. The mirror 240 reflects the light from the condenser lens 250 in a direction of the input end surface 100a of the PIC 100. The photodiode 202 is a photodetector that detects the light reflected at the input end surface 100a. The photodiode 202 outputs a signal related to the detected light to the computer 70.

The second scanner unit 300 is configured to perform optical scanning on the output end surface 100b (second region) of the PIC 100, on which the plurality of optical output units 102 are formed, and detect light related to the optical scanning (specifically, light reflected at the output end surface 100b).

The second scanner unit 300 is configured to include a laser light source 301, a photodiode 302, and a galvanometer mirror (optical scanner) 303. The laser light source 301 is a light source emitting laser light. The galvanometer mirror 303 is an optical scanner that reflects the light emitted from the laser light source 201 in an arbitrary direction, thereby achieving optical scanning on the output end surface 100b. The output end surface 100b of the PIC 100 is irradiated with the light from the galvanometer mirror 303 via the condenser lens 50 and the mirror 40. The photodiode 302 is a photodetector that detects the light reflected at the output end surface 100b. The photodiode 302 outputs a signal related to the detected light to the computer 70.

The observation camera 402 is a camera for observing a probing operation of the probe card 30 on the chip of the PIC 100. The observation camera 402 performs the above-described observation by detecting light that has passed through the condenser lens 401 serving as, for example, an objective lens.

In the following, the preliminary preparation steps (the setting step, the step of roughly determining the position of the optical input unit 101, the step of roughly determining the position of the optical output unit 102, the step of determining the position of the optical input unit 101 with high accuracy, and the step of determining the position of the optical output unit 102 with high accuracy) and the step of deriving wavelength information will be described in chronological order.

(Setting step)

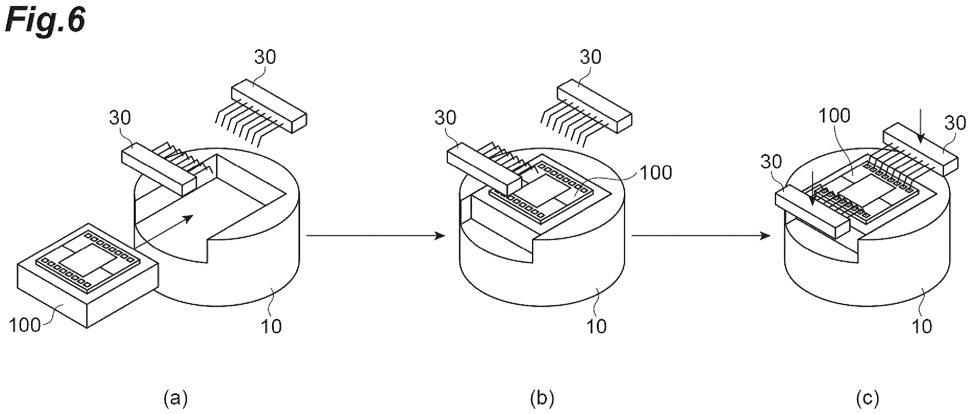

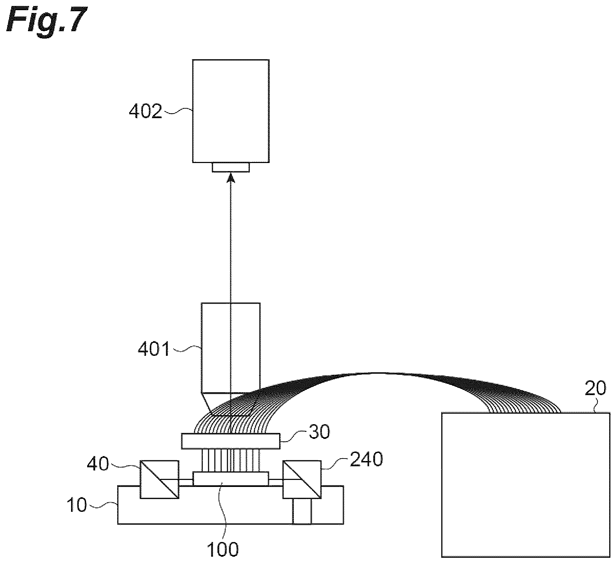

FIGS. 6(a) to 6(c) and FIG. 7 are views illustrating the setting step. First, as illustrated in FIG. 6(a), a chip of the PIC 100 is mounted in a recessed portion on an upper surface of the stage 10. Then, as illustrated in FIG. 6(b), the PIC 100 is fixed to the stage 10, and a position and an orientation (inclination) of the stage 10 are adjusted. Next, as illustrated in FIG. 7 and FIG. 6(c), probing of the chip of the PIC 100 with the probe card 30 is performed while the position of the probe card 30 is observed by the observation camera 402. The above describes the setting step.

(Step of roughly determining position of optical input unit 101)

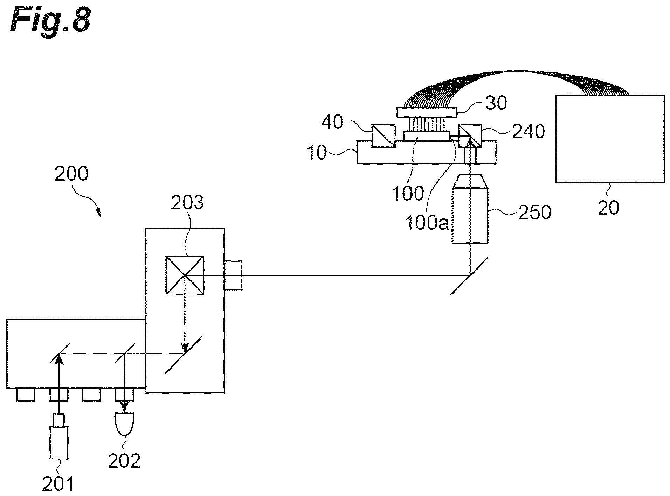

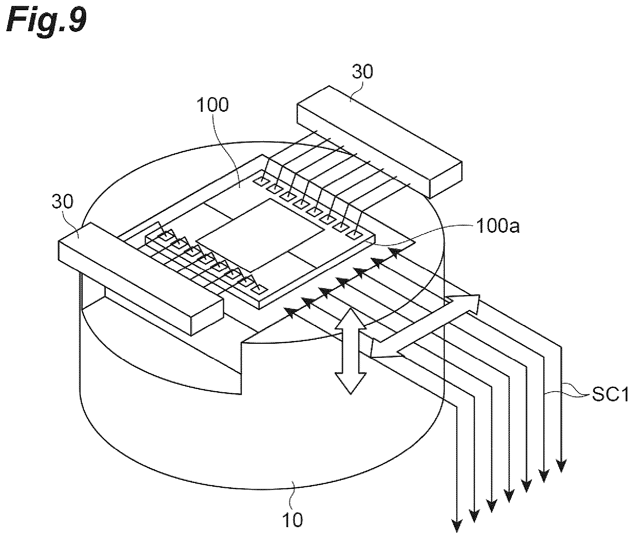

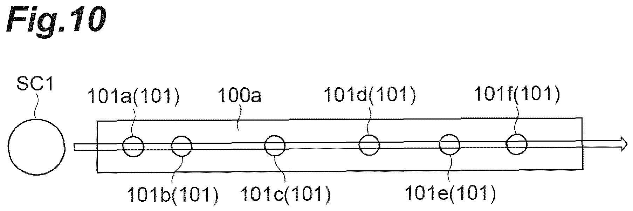

FIGS. 8 to 10 are views illustrating the step of roughly determining a position of the optical input unit 101. As illustrated in FIG. 8, the input end surface 100a of the PIC 100 is irradiated with light by the first scanner unit 200. As illustrated in FIG. 9, the first scanner unit 200 scans an irradiation region of a light SC1 from the laser light source 201 on the input end surface 100a in a horizontal direction and/or vertical direction, thereby performing optical scanning. Here, as illustrated in FIG. 10, there are the plurality of optical input units 101 (input units 101a, 101b, 101c, 101d, 101e, and 101f in the example in FIG. 10) on the input end surface 100a, and a diameter of the light SC1 scanned at the input end surface 100a is larger than a diameter of each of the optical input units 101a to 101f. The diameter of each of the optical input units 101a to 101f is, for example, 1 $\mu$m or less and may be about 0.5 $\mu$m. The photodiode 202 of the first scanner unit 200 detects the light reflected at the input end surface 100a and outputs a signal related to the detected signal to the computer 70. The signal is a signal indicating at least an intensity of the light detected by the photodiode 202. Further, before the optical scanning, a position of the stage 10 or the first scanner unit 200 may be adjusted to bring the input end surface 100a of the PIC 100 into focus.

Then, the computer 70 determines rough positions of the optical input units 101a to 101f on the basis of the signal (signal indicating an intensity of the detected light) output by the photodiode 202 of the first scanner unit 200. Such processing is a second processing to preliminarily determine the positions of the optical input units 101a to 101f into which light is input when the first processing of deriving the wavelength information of the light is performed. The computer 70 determines the positions of the optical input units 101a to 101f based on differences in light intensity according to a difference between the reflectance at the optical input units 101a to 101f and the reflectance at regions other than the optical input units 101a to 101f on the input end surface 100a. The positions of the optical input units 101a to 101f determined here are rough positions, and accurate positions thereof will be determined in the "step of determining the position of the optical input unit 101 with high accuracy" to be described later.

(Step of roughly determining position of optical output unit 102)

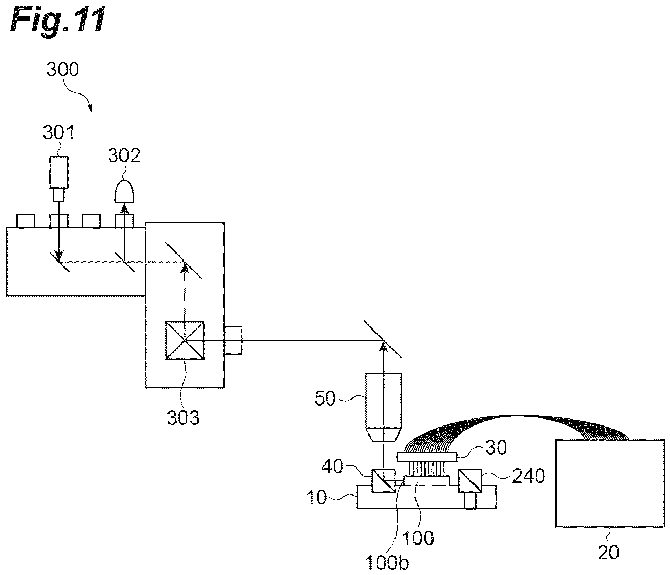

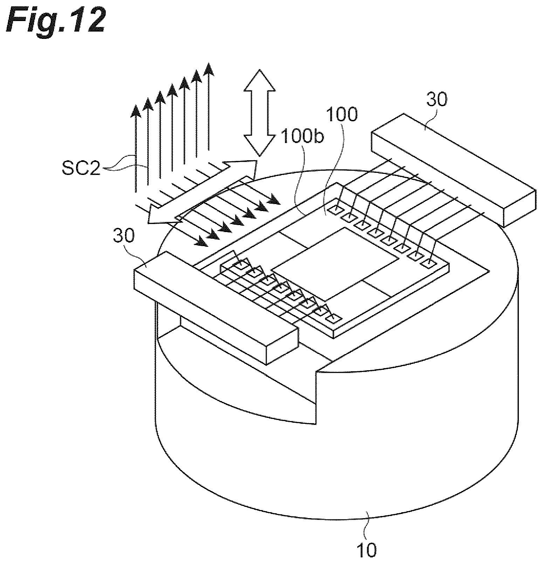

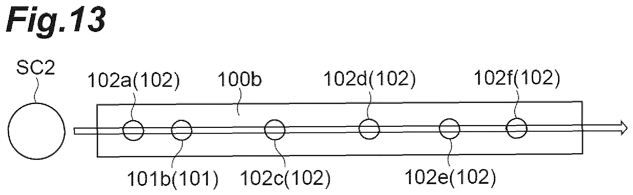

FIGS. 11 to 13 are views illustrating the step of roughly determining a position of the optical output unit 102. As illustrated in FIG. 11, the output end surface 100b of the PIC 100 is irradiated with light by the second scanner unit 300. As illustrated in FIG. 12, the second scanner unit 300 scans an irradiation region of a light SC2 from the laser light source 301 on the output end surface 100b in a horizontal direction and/or vertical direction, thereby performing optical scanning. Here, as illustrated in FIG. 13, there are the plurality of output units 102 (output units 102a, 102b, 102c, 102d, 102e, and 102f in the example in FIG. 13) on the output end surface 100b, and a diameter of the light SC2 scanned at the output end surface 100b is larger than a diameter of each of the optical output units 102a to 102f. The diameter of each of the optical output units 102a to 102f is, for example, 1 $\mu$m or less and may be about 0.5 $\mu$m. The photodiode 302 of the second scanner unit 300 detects the light reflected at the output end surface 100b and outputs a signal related to the detected signal to the computer 70. The signal is a signal indicating at least an intensity of the light detected by the photodiode 302. Further, before the optical scanning, a position of the stage 10 or the second scanner unit 300 may be adjusted to bring the output end surface 100b of the PIC 100 into focus.

Then, the computer 70 determines rough positions of the optical output units 102a to 102f on the basis of the signal (signal indicating an intensity of the detected light) output by the photodiode 302 of the second scanner unit 300. Such processing is a third processing to preliminarily determine the positions of the optical output units 102a to 102f that output light when the first processing of deriving the wavelength information of the light is performed. The computer 70 determines the positions of the optical output units 102a to 102f based on differences in light intensity according to a difference between the reflectance at the optical output units 102a to 102f and the reflectance at regions other than the optical output units 102a to 102f on the output end surface 100b. The positions of the optical output units 102a to 102f determined here are rough positions, and accurate positions thereof will be determined in the "step of determining the position of the optical output unit 102 with high accuracy" to be described later.

(Step of determining position of optical input unit 101 with high accuracy)

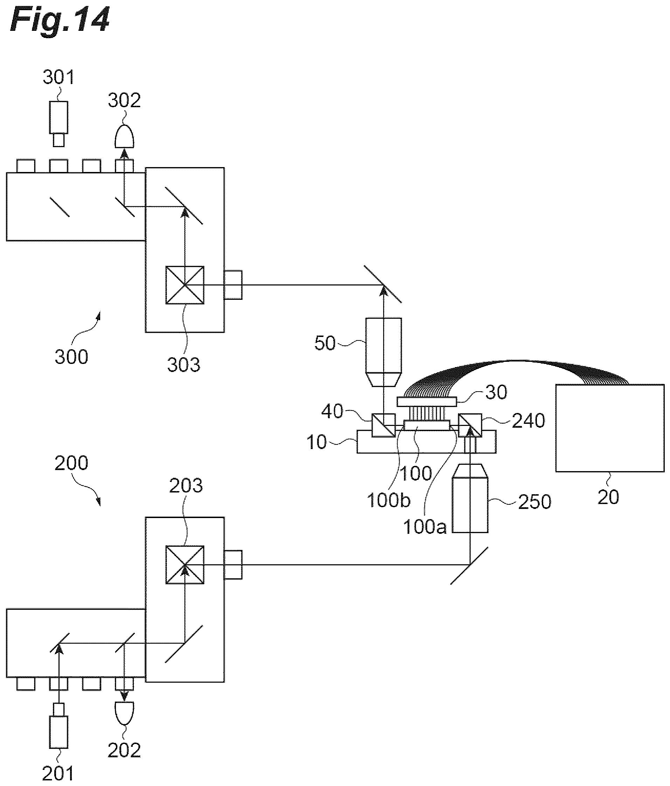

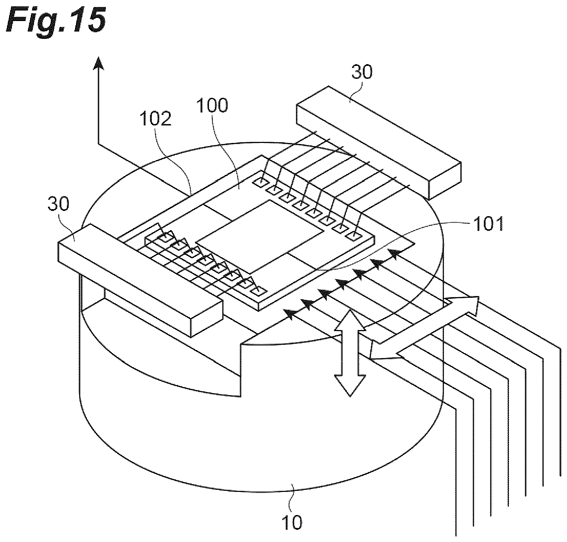

FIGS. 14 and 15 are views illustrating the step of determining a position of the optical input unit 101 with high accuracy. As illustrated in FIGS. 14 and 15, with the second scanner unit 300 positioned at the predetermined optical output unit 102 (the optical output unit 102 whose position has been determined by the step of roughly determining the position of the optical output unit 102), light is input to each optical input unit 101 (the optical input units 101a to 101f) by the first scanner unit 200. Then, the light output from the above-described optical output unit 102 is detected by the photodiode 302 of the second scanner unit 300. Light is scanned over the optical input units 101a to 101f (and their surroundings), whose rough positions have already been determined, by the first scanner unit 200, and light intensities thereof are detected by the photodiode 302, thereby enabling accurate determination of the positions of the optical input units 101a to 101f from a difference in light intensity.

(Step of determining position of optical output unit 102 with high accuracy)

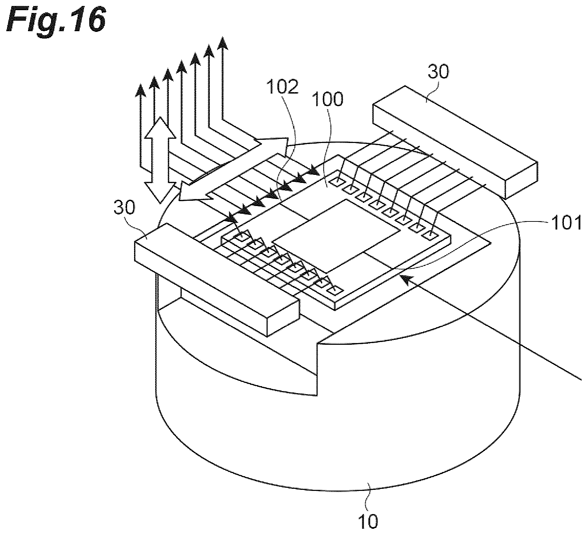

FIGS. 14 and 16 are views illustrating the step of determining a position of the optical output unit 102 with high accuracy. As illustrated in FIGS. 14 and 16, with the first scanner unit 200 positioned at the predetermined optical input unit 101, light is input to the optical input unit 101 by the first scanner unit 200. Then, the light output from the PIC 100 is detected by the photodiode 302 of the second scanner unit 300. Light is scanned over the optical output units 102a to 102f (and their surroundings), whose rough positions have already been determined, by the second scanner unit 300, and light intensities thereof are detected by the photodiode 302, thereby enabling accurate determination of the positions of the optical output units 102a to 102f from a difference in light intensity.

(Step of deriving wavelength information)

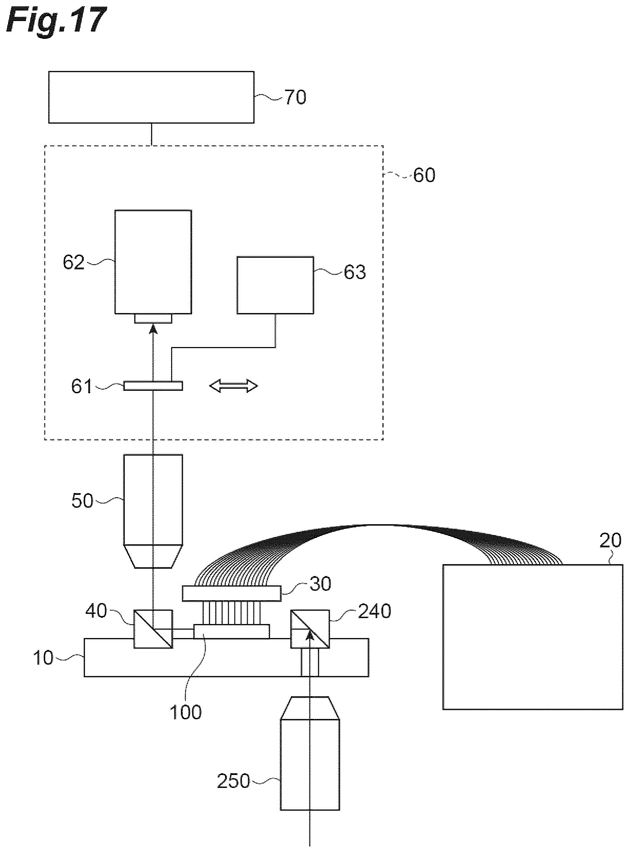

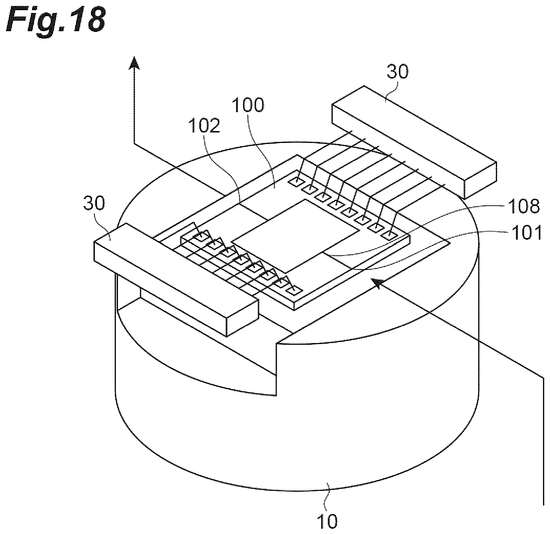

FIGS. 17 to 19 are views illustrating the step of deriving wavelength information. As illustrated in FIG. 17, first, the imaging mechanism 60 is aligned in position so that the light output from the plurality of optical output units 102a to 102f can be collectively captured. Specifically, the LRG filter 61 is moved by the switching unit 63 so that the LRG filter 61 is positioned in an optical path between the optical output units 102a to 102f and the camera 62, and the light transmitted through the LRG filter 61 is captured by the camera 62. In this case, the LRG filter 61 transmits or reflects the light (see FIG. 18) input from the optical input unit 101, guided by the waveguide 108, and output from the optical output unit 102 on the basis of transmission characteristics of the light. Then, with the light input to the desired optical input unit 101, the light output from the optical output unit 102 of the PIC 100 and transmitted through the LRG filter 61 is captured by the camera 62.

Next, the LRG filter 61 is moved by the switching unit 63 so that the LRG filter 61 is not positioned in the optical path between the optical output units 102a to 102f and the camera 62, light which has arrived without passing through the LRG filter 61 is captured by the camera 62. In this case, with the light input to the desired optical input unit 101, the light output from the optical output unit 102 of the PIC 100 which has arrived without passing through the LRG filter 61 is captured by the camera 62.

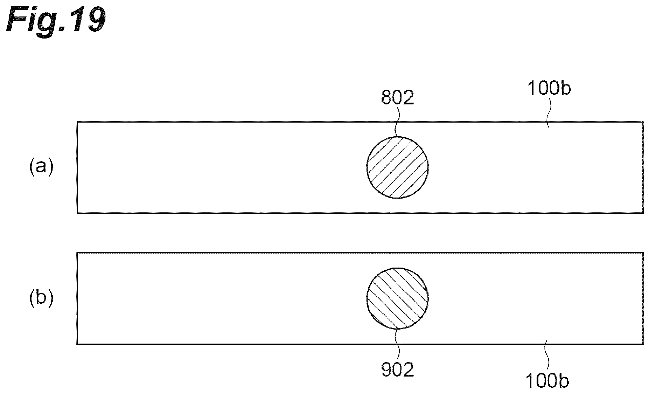

FIG. 19(a) is a view illustrating an image of the optical output unit 102 captured by the camera 62, which is an image 802 (transmission image) of light that has passed through the LRG filter 61, and FIG. 19(b) is a view illustrating an image of the optical output unit 102 captured by the camera 62, which is an image 902 (total light quantity image) of light which has arrived without passing through the LRG filter 61. These images 802 and 902 each represent an image corresponding to a quantity of light captured. That is, an integrated value of intensities of the plurality of pixels constituting the image 802 may be used as the transmission intensity (transmitted light quantity), and an integrated value of intensities of the plurality of pixels constituting the image 902 may be used as the total intensity (total light quantity).

The computer 70 performs the first processing of deriving wavelength information (specifically, the centroid wavelength) of the light output from each of the output units 102a to 102f on the basis of the transmission image and the total light quantity image captured by the camera 62. An example of the method for deriving the centroid wavelength is as described above.

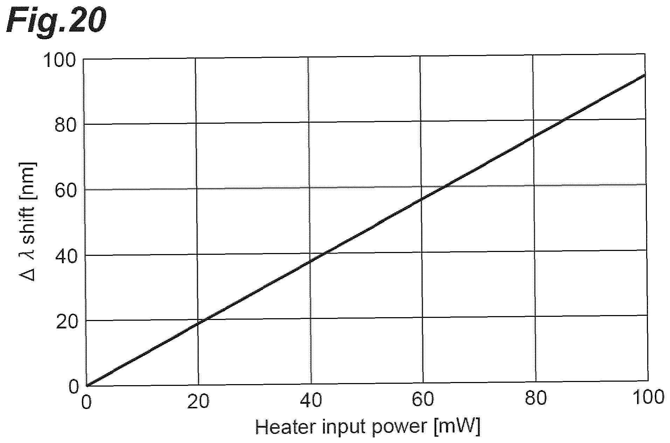

Further, the computer 70 may create a table indicating a relationship between wavelength information and a temperature control of the PIC by associating the wavelength information derived in the first processing with information related to the temperature control of the PIC (for example, power supplied to the microheaters) performed by the PIC controller 20 at the time the wavelength information is derived. Such a table can be used during normal PIC control (wavelength control of the PIC 100). As described above, the PIC controller 20 supplies power to the microheaters and controls a temperature of at least a part of the PIC 100. Through such temperature control, a refractive index of the light guided in the waveguide 108 of the PIC 100 is controlled, thereby controlling the wavelength of the light output from the PIC 100. For example, when conditions of input power to the microheaters by the PIC controller 20 are changed and the wavelength information is derived through the first processing for each condition, it is possible to create a table, as shown in FIG. 20, in which the input power to the microheaters is associated with the wavelength information. In FIG. 20, the horizontal axis represents input power to the microheaters, and the vertical axis represents a resonance wavelength shift amount ($\delta\lambda$ in the above-described expression (18)).

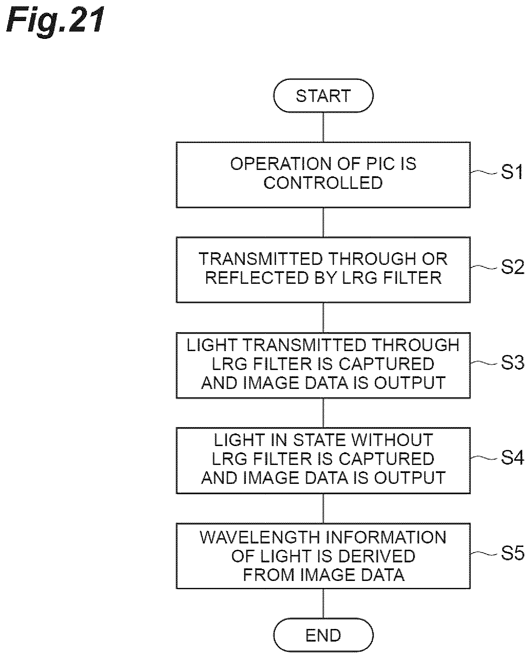

Next, the step of deriving wavelength information in the inspection method performed using the inspection apparatus 1 will be described with reference to the flowchart shown in FIG. 21. FIG. 21 is a flowchart of the inspection method (specifically the step of deriving wavelength information).

As shown in FIG. 21, in the step of deriving wavelength information, an operation of the PIC 100 is first controlled by the PIC controller 20 (step S1). Here, the "control of the operation" refers to control of an operation of each element within the PIC 100.

Next, the LRG filter 61 disposed in the optical path between the optical output unit 102 and the camera 62 transmits the light output from the optical output unit 102 (step S2).

Next, the light transmitted through the LRG filter 61 is captured by the camera 62, and the transmission image is output to the computer 70 (step S3).

Next, the LRG filter 61 is withdrawn from the optical path between the optical output unit 102 and the camera 62, and the light which has arrived without passing through the LRG filter 61 is captured by the camera 62, and the total light quantity image is output to the computer 70 (step S4).

Then, the wavelength information of the light output from the optical output unit 102 is derived by the computer 70 on the basis of the transmission image and the total light quantity image (step S5).

Next, an operation and effects of the inspection apparatus 1 according to the present embodiment will be described.

The inspection apparatus 1 is an inspection apparatus for inspecting the PIC 100 having at least one optical output unit 102 and the waveguide 108, and includes the stage 10 holding the PIC 100, the PIC controller 20 configured to control an operation of the PIC 100, the LRG filter 61 having a transmission characteristic in which a transmittance varies linearly in a predetermined wavelength range, and transmitting or reflecting light guided by the waveguide 108 and output from the at least one optical output unit 102 on the basis of the transmission characteristic, the camera 62 capturing light transmitted through the LRG filter 61 to output a transmission image and capturing light output from the optical output unit 102, which has arrived without passing through the LRG filter 61, to output a total light quantity image, and the computer 70 performing a first processing to derive wavelength information of the light output from the optical output unit 102 on the basis of the transmission image and the total light quantity image.

In the inspection apparatus 1 according to the present embodiment, the light output from the optical output unit 102 of the PIC 100 is transmitted through or reflected by the LRG filter 61 according to a wavelength thereof. Then, the wavelength information of the light output from the optical output unit 102 is derived on the basis of the transmission image obtained by capturing the light transmitted through or reflected by the LRG filter 61, and the total light quantity image obtained by capturing the light which has arrived without passing through the LRG filter 61. In this manner, in the inspection apparatus 1 according to the present embodiment, since the LRG filter 61 is used to transmit or reflect light according to the wavelength, the transmission image serves as image data according to the wavelength of the light. Also, since the transmission image is image data obtained by capturing the light transmitted through the LRG filter 61, and the total light quantity image is image data obtained by capturing the light which has arrived without passing through the LRG filter 61, it is possible to acquire information, from these image data, not only about the light transmitted through the LRG filter 61, but also about the light reflected by the LRG filter 61. When information about the light that has been transmitted or reflected according to the wavelength is acquired in this way, the wavelength information of the light can be acquired with high accuracy. As described above, according to the inspection apparatus 1 of the present embodiment, it is possible to acquire information (specifically, wavelength information) of the light output from the PIC 100, and as a result, the PIC 100 can be appropriately inspected using the wavelength information.

The PIC 100 may include the plurality of optical output units 102a to 102f, and the LRG filter 61 may transmit or reflect each light output from the plurality of optical output units 102a to 102f on the basis of the transmission characteristic. According to such a configuration, the wavelength information of the light from the plurality of optical output units 102a to 102f, which are provided at spatially different positions from each other, can be collectively acquired, allowing the PIC 100 to be inspected more quickly and appropriately.

The imaging unit may include the camera 62 which is an image sensor that captures the light transmitted through or reflected by the LRG filter 61, and captures the light output from the optical output unit 102 which has arrived without passing through the LRG filter 61. According to such a camera 62, it is possible to appropriately capture desired light.

The inspection apparatus 1 may further include the switching unit 63 which is configured to be able to switch between a state in which the LRG filter 61 is provided in the optical path between the optical output unit 102 and the camera 62 and a state in which the LRG filter 61 is not provided. According to such a configuration, it is possible to appropriately acquire both the transmission image and the total light quantity image described above while switching between the presence and absence of the LRG filter 61.

The PIC controller 20 may control a temperature of at least a part of the PIC the 100. When the temperature of the PIC 100 is controlled in this way, the refractive index of the waveguide constituting the optical ring resonant circuit 110 of the PIC 100 can be changed, thereby controlling, for example, the resonance wavelength of the light in the optical ring resonant circuit 110. This allows the PIC 100 to be appropriately inspected while easily changing wavelength conditions of the light.

The PIC 100 may have at least one optical input unit 101, and the optical output unit 102 may output light input from the optical input unit 101 and guided by the waveguide 108. According to such a configuration, it is possible to appropriately acquire wavelength information of the light that is input from the optical input unit 101 of the PIC 100, passes through the waveguide 108, and is output from the optical output unit 102.

The above-described inspection apparatus 1 may further include the first scanner unit 200 that performs optical scanning on the input end surface 100a of the PIC 100 on which the optical input unit 101 is formed and detects light related to the optical scanning, in which the computer 70 may further perform the second processing to determine in advance a position of the optical input unit 101 onto which light is input when the first processing is performed, and in the second processing, the position of the optical input unit 101 may be determined on the basis of the intensity of the light detected by the first scanner unit 200. According to such a configuration, the position of the optical input unit 101 can be determined from a difference in light intensity, and the subsequent first processing (processing of deriving wavelength information of the light output from the optical output unit 102) can be appropriately performed.

The above-described inspection apparatus 1 may further include the second scanner unit 300 that performs optical scanning on the output end surface 100b of the PIC 100 on which the optical output unit 102 is formed and detects light related to the optical scanning, in which the computer 70 may further perform the third processing to determine in advance a position of the optical output unit 102 that outputs light when the first processing is performed, and in the third processing, the position of the optical output unit 102 may be determined on the basis of the intensity of the light detected by the second scanner unit 300. According to such a configuration, the position of the optical output unit 102 can be determined from a difference in light intensity, and the subsequent first processing (processing of deriving wavelength information of the light output from the optical output unit 102) can be appropriately performed.

In the first processing, the computer 70 may derive the transmission intensity, which is an intensity of the light transmitted through the LRG filter 61, from the transmission image, derive the total intensity of the light output from the optical output unit 102 from the total light quantity image, derive the reflection intensity, which is an intensity of the light reflected by the LRG filter 61, on the basis of the transmission intensity and the total intensity, and derive the wavelength information on the basis of the transmission intensity and the reflection intensity. Since light is transmitted or reflected according to the wavelength in the LRG filter 61, the wavelength information can be derived with high accuracy from the information on the transmission intensity (transmitted light quantity) and the reflection intensity (reflected light quantity).

The computer 70 may derive a difference value between the transmission intensity and the reflection intensity, and derive the wavelength information on the basis of the difference value. The wavelength information can be derived with high accuracy by deriving the wavelength information from the difference value between the transmission intensity and the reflection intensity.

The wavelength information may be information indicating the centroid wavelength of the light output from the optical output unit 102. Thereby, the wavelength information can be appropriately derived.

The computer 70 may further perform a fourth processing to create a table showing a relationship between the wavelength information and a temperature control of the PIC 100 by associating the wavelength information derived in the first processing with information related to the temperature control of the PIC 100 by the PIC controller 20 when the wavelength information was derived. According to such a configuration, it is possible to create a table for temperature control when the wavelength of the PIC 100 is adjusted, making it easier to control the PIC 100.

[Second embodiment]

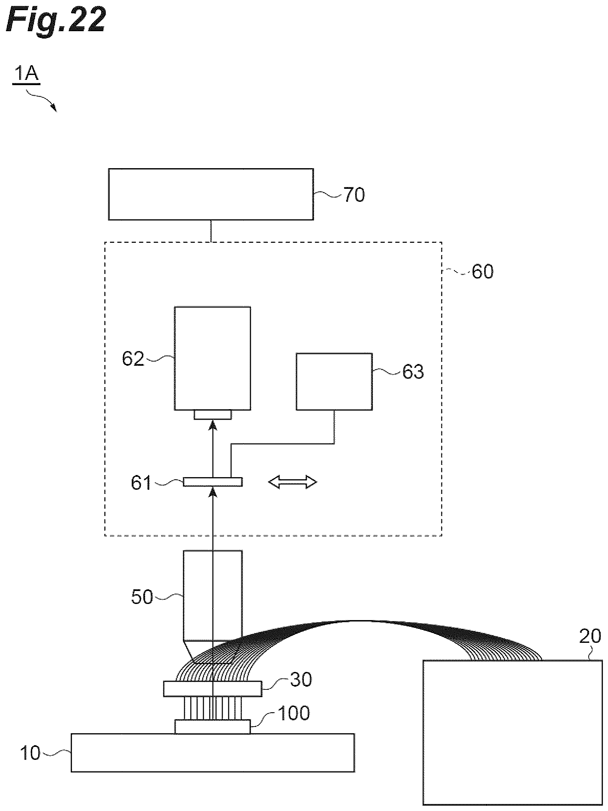

Hereinafter, a second embodiment of the present disclosure will be described with reference to FIGS. 22 to 25. In the second embodiment, points different from the first embodiment will be mainly described, and redundant explanations overlapping those of the first embodiment will be omitted.

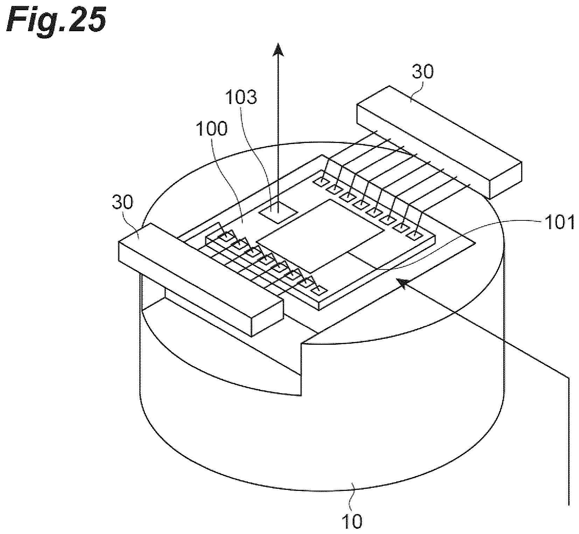

FIG. 22 is a side view schematically illustrating an inspection apparatus 1A according to the second embodiment. The inspection apparatus 1A has the same configuration as the inspection apparatus 1. The inspection apparatus 1A derives wavelength information of light output from a grating 103 (see FIG. 25), which is a optical output unit provided on a front surface (upper surface) of a PIC 100. In this case, an imaging mechanism 60 is disposed to be positioned directly above the front surface (upper surface) of the PIC 100 so that the light output from the grating 103 can be captured.

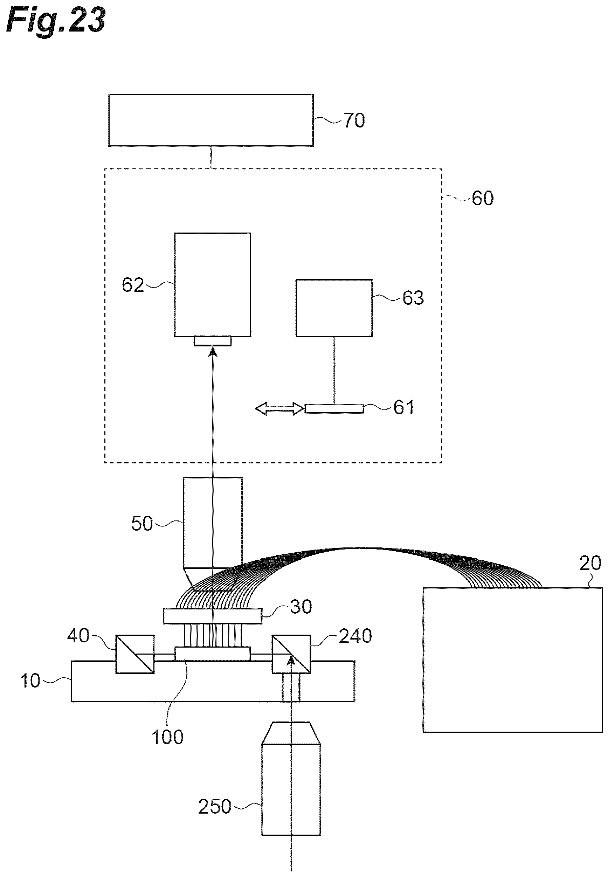

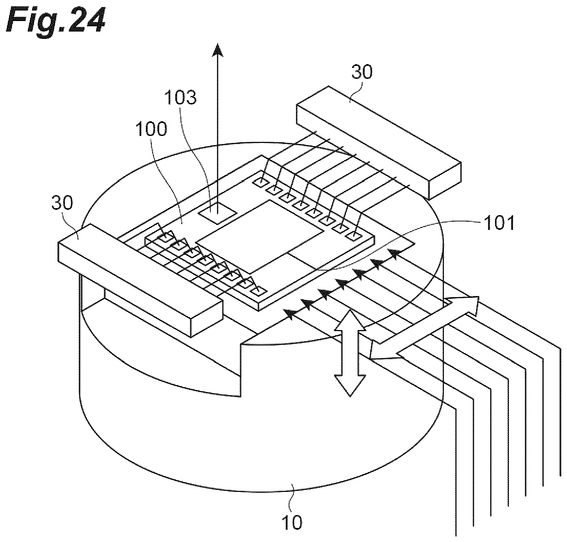

Steps of an inspection method performed using the inspection apparatus 1A will be described. Also in the present inspection method, as in the inspection method according to the first embodiment, a setting step (see FIGS. 6(a) to 6(c)) is first performed. Next, if necessary, a step of roughly determining a position of a optical input unit 101 and a step of determining the position of the optical input unit 101 with high accuracy are performed. These steps are similar to those described in the first embodiment. Next, a step of determining a position of the grating 103 is performed. Specifically, as illustrated in FIGS. 23 and 24, light is input to the optical input unit 101 of the PIC 100 by a first scanner unit 200, and light from the grating 103 formed on the front surface (upper surface) of the PIC 100 is captured by a camera 62. In this case, the light is input to each optical input unit 101 by scanning performed by the first scanner unit 200. In this way, when the light from the grating 103 is captured by the camera 62, the position of the grating 103 formed on the front surface (upper surface) of the PIC 100 can be determined with high accuracy.

Next, a step of deriving wavelength information is performed. Specifically, first, the imaging mechanism 60 is aligned in position so that it can capture the light output from the grating 103. Specifically, an LRG filter 61 transmits or reflects the light output from the grating 103 on the basis of a transmission characteristic. At this time, a condenser lens 50 and/or a stage 10 may be adjusted in an optical axis direction of the condenser lens 50 to bring the front surface (upper surface) of the PIC 100 into focus. Then, with light input to the desired optical input unit 101, the light is output from the grating 103 formed on the front surface (upper surface) of the PIC 100 (see FIG. 25), the light is transmitted through or reflected by the LRG filter 61, and the transmitted light is captured by the camera 62.

Also, after the LRG filter 61 is withdrawn from the optical path, with the light input to the desired optical input unit 101, the light is output from the grating 103 formed on the front surface (upper surface) of the PIC 100 (see FIG. 25), and the light is captured by the camera 62.

Then, the wavelength information (specifically, a centroid wavelength) of the light output from the grating 103 is derived by a computer 70 on the basis of the transmission image and total light quantity image captured by the camera 62.

[Third embodiment]

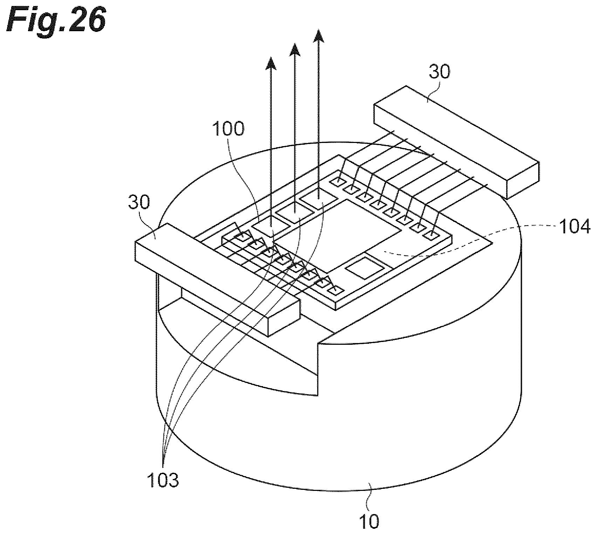

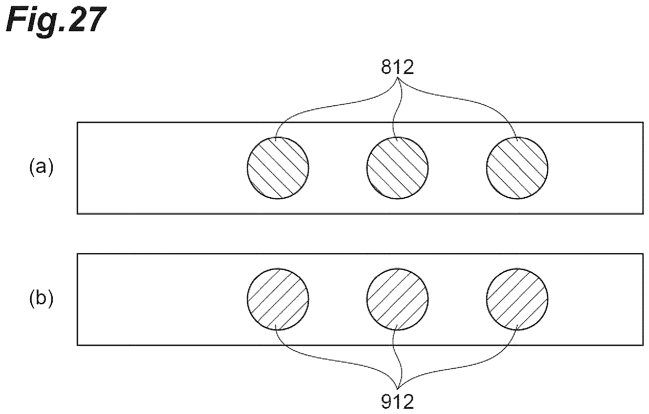

Hereinafter, a third embodiment of the present disclosure will be described with reference to FIGS. 26 and 27. In the third embodiment, points different from the first embodiment and the second embodiment will be mainly described, and redundant explanations overlapping those of the first embodiment and the second embodiment will be omitted.

FIGS. 26 and 27 are views illustrating a step of deriving wavelength information in the third embodiment. As illustrated in FIG. 26, in the third embodiment, light is emitted from a laser element 104 inside a PIC 100, and the light is output from a plurality of gratings 103 formed on a front surface (upper surface) of the PIC 100 That is, in the third embodiment, instead of light input to the inside of the PIC 100 from the outside of the PIC 100, light generated by the laser element 104 inside the PIC 100 is output from the plurality of gratings 103.

Step of an inspection method in this case will be described. Also in the present inspection method, as in the inspection method according to the second embodiment, a preliminary preparation step such as a setting step is performed, followed by a step of deriving wavelength information.

In the step of deriving wavelength information, first, an imaging mechanism 60 is aligned in position so that the light output from the plurality of gratings 103 can be collectively captured. Specifically, an LRG filter 61 transmits or reflects the light output from the plurality of gratings 103 on the basis of a transmission characteristic. At this time, a condenser lens 50 and/or a stage 10 may be adjusted in an optical axis direction of the condenser lens 50 to bring the front surface (upper surface) of the PIC 100 into focus. Then, with light emitted from the laser element 104 inside the PIC 100, the light is output from the plurality of gratings 103 formed on the front surface (upper surface) of the PIC 100 (see FIG. 26), the light is transmitted through or reflected by the LRG filter 61, and the transmitted light is captured by a camera 62.

Also, after the LRG filter 61 is withdrawn from the optical path, with the light emitted from the laser element 104 inside the PIC 100, the light is output from the plurality of gratings 103 formed on the front surface (upper surface) of the PIC 100 (see FIG. 26), and the light is captured by the camera 62.

FIG. 27(a) is a view illustrating an image of the plurality of gratings 103 captured by the camera 62 and an image 812 (transmission image) of light transmitted through the LRG filter 61, and FIG. 27(b) is a view illustrating an image of the plurality of gratings 103 captured by the camera 62 and an image 912 (reflection image) of light which has arrived without passing through the LRG filter 61. These images 812 and 912 each represent an image corresponding to a quantity of light captured.

Then, the wavelength information (specifically, a centroid wavelength) of the light output from each grating 103 is derived by a computer 70 on the basis of the transmission image and total light quantity image captured by the camera 62.

Embodiments of the present disclosure have been described above, but the present disclosure is not limited to the embodiments described above.

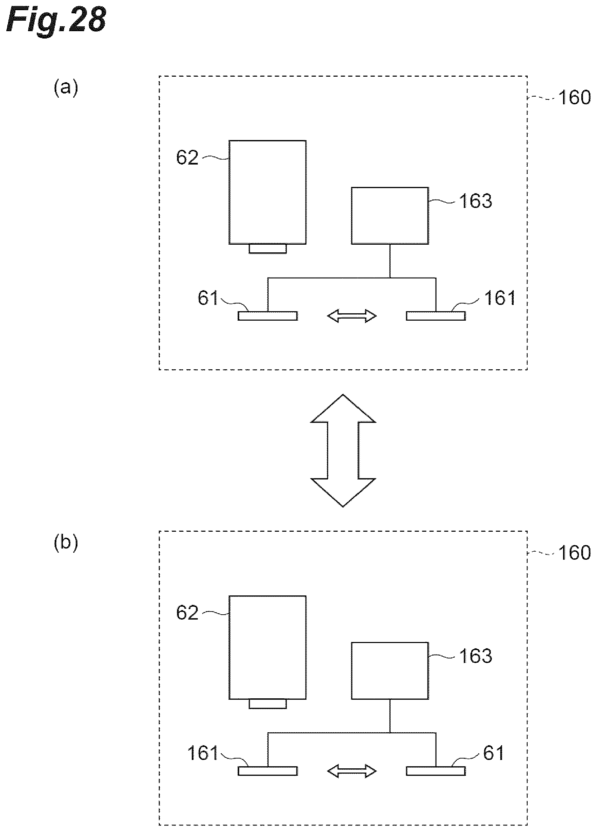

FIGS. 28(a) and 28(b) are views illustrating an imaging mechanism 160 according to a first modified example. The imaging mechanism 160 differs from the above-described imaging mechanism 60 in that a switching unit 163 is configured to be able to switch between the LRG filter 61 and a normalization filter 161.

The imaging mechanism 160 includes the LRG filter 61, the normalization filter 161, the camera 62, and the switching unit 163. The normalization filter 161 is a filter that spatially reduces a light quantity uniformly, and is, for example, an ND filter. The switching unit 163 is configured to be able to switch between a state in which the LRG filter 61 is provided in the optical path between the optical output unit 102 and the camera 62 (see FIG. 28(a)) and a state in which the LRG filter 61 is not provided but the normalization filter 161 is provided (see FIG. 28(b)). The switching unit 163 may achieve the above-described switching by moving the LRG filter 61 and the normalization filter 161.

In a state in which the normalization filter 161 is provided in the optical path, the total light quantity (total light quantity of the light output from the optical output unit 102) in a state in which the LRG filter 61 is not provided may be derived by, for example, using the normalization filter 161 that emits light at about 50% of the incident light quantity and setting a brightness of the camera 62 to about twice its normal level.

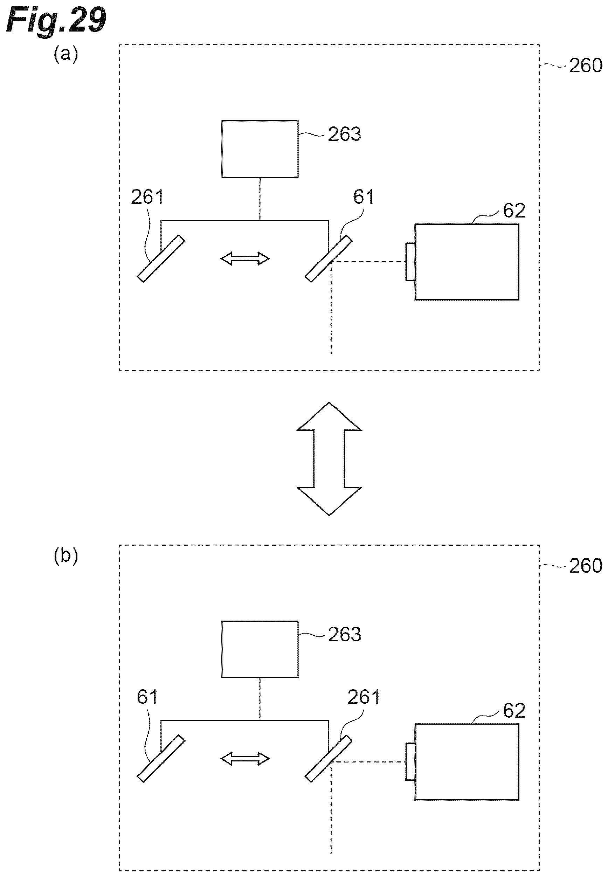

FIGS. 29(a) and 29(b) are views illustrating an imaging mechanism 260 according to a second modified example. The imaging mechanism 260 differs from the imaging mechanism 60 described above in that the camera 62 captures light reflected by the LRG filter 61.

The imaging mechanism 260 includes the LRG filter 61, a mirror 261, the camera 62, and a switching unit 263. The switching unit 263 is configured to be able to switch between a state in which the LRG filter 61 is provided in the optical path between the optical output unit 102 and the camera 62 (see FIG. 29(a)) and a state in which the LRG filter 61 is not provided but the mirror 261 is provided (see FIG. 29(b)). The switching unit 163 may achieve the above-described switching by moving the LRG filter 61 and the mirror 261.

In this case, the camera 62 is provided at a position to capture the light reflected by the LRG filter 61 when the LRG filter 61 is provided in the optical path (see FIG. 29(a)), and is positioned to capture the light reflected by the mirror 261 when the mirror 261 is provided in the optical path (see FIG. 29(b)). In a state in which the mirror 261 is provided in the optical path, a total light quantity of the light output from the optical output unit 102 is acquired.

In the first processing, the computer 70 derives a reflection intensity, which is an intensity of the light reflected by the LRG filter 61, from the reflection image (see FIG. 29(a)), derives a total intensity of the light output from the optical output unit 102 from the total light quantity image (see FIG. 29(b)), derives a transmission intensity, which is an intensity of the light transmitted through the LRG filter 61 on the basis of the reflection intensity and the total intensity, and derives wavelength information on the basis of the transmission intensity and reflection intensity.

In detail, the computer 70 performs the first processing of deriving wavelength information of the light output from the optical output unit 102 of the PIC 100 on the basis of the reflection image and the total light quantity image described above. In the first processing, the computer 70 derives the reflection intensity (reflected light quantity), which is an intensity of the light reflected by the LRG filter 61, on the basis of the reflection image, and derives the total intensity (total light quantity) of the light output from the optical output unit 102 on the basis of the total light quantity image. Then, the computer 70 derives the transmission intensity (transmitted light quantity), which is an intensity of the light transmitted through the LRG filter 61, on the basis of the reflection intensity and the total intensity, specifically by subtracting the reflection intensity from the total intensity. For example, assuming that the transmission intensity is T, the reflection intensity is R, the total light quantity is A, and a difference value between the transmission intensity T and the reflection intensity R is D, T = A-R and D = A-2R hold true. Also, the reflection intensity (reflected light quantity) may also be an integrated value of intensities in the region of the image corresponding to the optical output unit 102 in the reflection image. Also, the total intensity (total light quantity) may also be an integrated value of intensities in the region of the image corresponding to the optical output unit 102 in the total light quantity image. In this case, the transmission intensity (transmitted light quantity) derived by the calculation is obtained as an integrated value of intensities in the region of the image corresponding to the optical output unit 102 Further, the reflection intensity (reflected light quantity) may also be an intensity of each pixel constituting the region of the image corresponding to the optical output unit 102 in the reflection image. Also, the total intensity (total light quantity) may also be an intensity of each pixel constituting the region of the image corresponding to the optical output unit 102 in the total light quantity image. In this case, the transmission intensity (transmitted light quantity) derived by the calculation is obtained as an intensity of each pixel constituting the region of the image corresponding to the optical output unit 102.

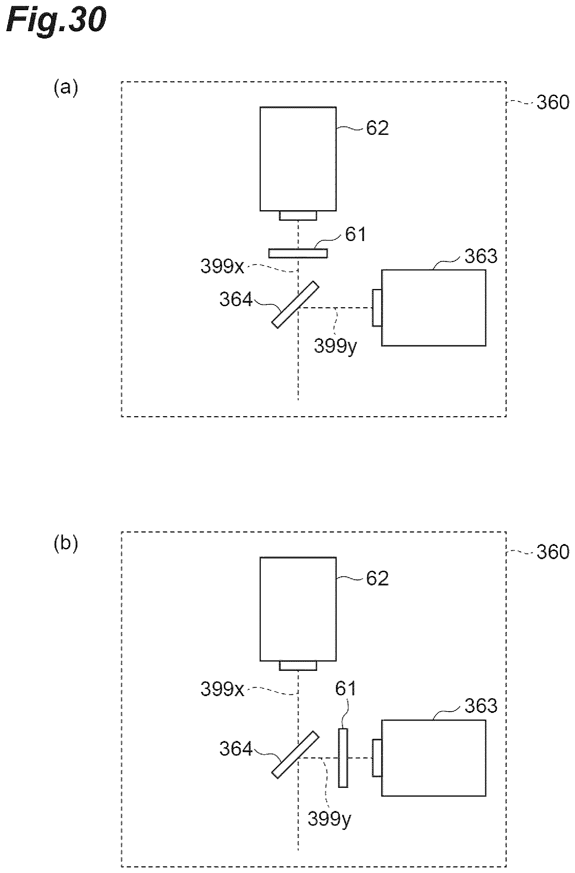

FIG. 30(a) is a view illustrating an imaging mechanism 360 according to a third modified example. The imaging mechanism 360 differs from the above-described imaging mechanism 60 in that it has two cameras 62 and 363 and simultaneously acquires both the transmission image and the total light quantity image.

The imaging mechanism 360 includes the LRG filter 61, the camera 62 (first image sensor), the camera 363 (second image sensor), and a beam splitter 364 (light branching portion). The beam splitter 364 is a splitter that branches the light output from the optical output unit 102 into a transmission optical path 399x (first branched optical path) and a reflection optical path 399y (second branched optical path). The beam splitter 364 is, for example, a half mirror or the like, and branches (splits) the light by transmitting and reflecting it. The camera 62 is disposed on the transmission optical path 399x. The camera 363 is disposed in the reflection optical path 399y. Also, the LRG filter 61 is disposed on the transmission optical path 399x.

According to such a configuration, light output from the optical output unit 102 is branched by the beam splitter 364 into the transmission optical path 399x and the reflection optical path 399y, and acquisition of the transmission image (first image data) by the camera 62 provided on the transmission optical path 399x and acquisition of the total light quantity image (second image data) by the camera 363 provided on the reflection optical path 399y can be simultaneously performed. Accordingly, the wavelength information can be efficiently derived.

Further, as illustrated in FIG. 30(b), the LRG filter 61 may be disposed on the reflection optical path 399y. In this case, the reflection optical path 399y is the first branched optical path, and the transmission optical path 399x is the second branched optical path.

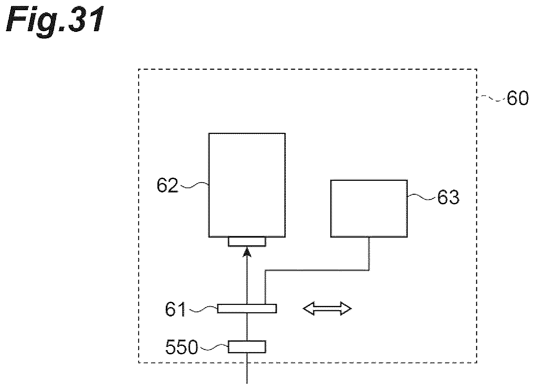

Also, as illustrated in FIG. 31, the imaging mechanism 60 may include a sensitivity correction filter 550 that flattens spectral response characteristics of the entire optical system in front of the LRG filter (optical filter) 61. When the sensitivity correction filter 550 is provided, a centroid of light having a wavelength width can be determined more accurately. Further, the sensitivity correction filter 550 may be provided between the LRG filter (optical filter) 61 and the camera (image sensor) 62.

Further, although it has been described that the wavelength information is derived by the computer 70 that is separate from the camera 62, the present disclosure is not limited thereto, and each processing such as derivation of wavelength information may be performed by an integrated circuit inside the camera. Also, the heater or cooler for adjusting a temperature of the PIC may be provided inside the PIC or outside the PIC. Also, the PIC controller, which controls an operation of the PIC, may be connected from outside the PIC by a tester or the like, or may be connected via a board that is electrically connected to a board of the PIC.

**Reference Signs List**

1, 1A Inspection apparatus, 10 Stage, 20 PIC controller, 61 LRG filter (optical filter), 62 Camera (imaging unit, image sensor, first image sensor), 70 Computer (analysis unit), 100a Input end surface (first region), 100b Output end surface (second region), 101 Optical input unit, 102 Optical output unit, 103 Grating (optical output unit), 108 Waveguide, 200 First scanner unit (first optical scanner unit), 300 Second scanner unit (second optical scanner unit) 363 Camera (second image sensor)

**Claims**

1. An inspection apparatus, which is an inspection apparatus inspecting a photonic integrated circuit having at least one optical output unit and a waveguide, comprising:

   a stage holding the photonic integrated circuit;
   a control unit controlling an operation of the photonic integrated circuit;

an optical filter having a transmission characteristic in which a transmittance varies linearly in a predetermined wavelength range and configured to transmit or reflect light that has been guided by the waveguide and output from the at least one optical output unit on the basis of the transmission characteristic;

an imaging unit capturing light transmitted through or reflected by the optical filter to output first image data and capturing light output from the optical output unit which has arrived without passing through the optical filter to output second image data; and

an analysis unit performing a first processing to derive wavelength information of the light output from the optical output unit on the basis of the first image data and the second image data.

2. The inspection apparatus according to claim 1, wherein

the photonic integrated circuit includes a plurality of optical output units, and
the optical filter transmits or reflects each light output from the plurality of optical output units on the basis of the transmission characteristic.

3. The inspection apparatus according to claim 1, wherein the imaging unit includes an image sensor capturing the light transmitted through or reflected by the optical filter and capturing the light output from the optical output unit which has arrived without passing through the optical filter.

4. The inspection apparatus according to claim 1, further comprising a switching unit configured to be able to switch between a state in which the optical filter is provided in an optical path between the optical output unit and the imaging unit and a state in which the optical filter is not provided.

5. The inspection apparatus according to claim 1, wherein

the imaging unit includes a light branching portion branching the light output from the optical output unit into a first branched optical path and a second branched optical path, a first image sensor disposed in the first branched optical path, and a second image sensor disposed in the second branched optical path,
the optical filter is disposed between the light branching portion on the first branched optical path and the first image sensor,
the first image sensor captures the light transmitted through or reflected by the optical filter to output the first image data, and
the second image sensor captures the light output from the optical output unit which has arrived without passing through the optical filter to output the second image data.

6. The inspection apparatus according to claim 1, wherein the control unit controls a temperature of at least a part of the photonic integrated circuit.

7. The inspection apparatus according to claim 1, wherein

the photonic integrated circuit has at least one optical input unit, and
the optical output unit outputs light input from the optical input unit and guided by the waveguide.

8. The inspection apparatus according to claim 7, further comprising a first optical scanner unit performing optical scanning on a first region of the photonic integrated circuit on which the optical input unit is formed and configured to detect light related to the optical scanning, wherein
the analysis unit further performs a second processing to preliminarily determine a position of the optical input unit into which light is input when the first processing is performed, and, in the second processing, determines the position of the optical input unit on the basis of an intensity of light detected by the first optical scanner unit.

9. The inspection apparatus according to claim 1, further comprising a second optical scanner unit performing optical scanning on a second region of the photonic integrated circuit on which the optical output unit is formed and configured to detect light related to the optical scanning, wherein
the analysis unit further performs a third processing to preliminarily determine a position of the optical output unit which outputs light when the first processing is performed, and, in the third processing, determines the position of the optical output unit on the basis of an intensity of light detected by the second optical scanner unit.

10. The inspection apparatus according to claim 1, wherein in the first processing, the analysis unit derives a transmission intensity, which is an intensity of the light transmitted through the optical filter, from the first image data, derives a total intensity of the light output from the optical output unit from the second image data, derives a reflection intensity, which is an intensity of the light reflected by the optical filter, on the basis of the transmission intensity and the total intensity, and derives the wavelength information on the basis of the transmission intensity and the reflection intensity.

11. The inspection apparatus according to claim 1, wherein in the first processing, the analysis unit derives a reflection intensity, which is an intensity of the light reflected by the optical filter, from the first image data, derives a total intensity of the light output from the optical output unit from the second image data, derives a transmission intensity, which is an intensity of the light transmitted through the optical filter, on the basis of the reflection intensity and the total intensity, and derives the wavelength information on the basis of the transmission intensity and the reflection intensity.

12. The inspection apparatus according to claim 10 or 11, wherein the analysis unit derives a difference value between the transmission intensity and the reflection intensity and derives the wavelength information on the basis of the difference value.

13. The inspection apparatus according to any one of claims 1 to 11, wherein the wavelength information is information indicating a centroid wavelength of the light output from the optical output unit.

14. The inspection apparatus according to any one of claims 1 to 11, wherein the analysis unit further performs a fourth processing to create a table showing a relationship between the wavelength information and a temperature control of the photonic integrated circuit by associating the wavelength information derived in the first processing with information related to the temperature control of the photonic integrated circuit by the control unit when the wavelength information was derived.

15. An inspection method, which is an inspection method of inspecting a photonic integrated circuit having at least one optical output unit and a waveguide, comprising:

controlling an operation of the photonic integrated circuit;
transmitting or reflecting, on the basis of a transmission characteristic, light that has been guided by the waveguide and output from the at least one optical output unit by an optical filter having the transmission characteristic in which a transmittance varies linearly in a predetermined wavelength range;
capturing the light transmitted through or reflected by the optical filter to output first image data;
capturing light output from the optical output unit which has arrived without passing through the optical filter to output second image data; and
deriving wavelength information of the light output from the optical output unit on the basis of the first image data and the second image data.

# Fig.1

<u>1</u>

*Fig.2*

# Fig.3

(a)

101    100a

(b)

102    100b

Fig.4

# Fig.5

Fig.6

(a)    (b)    (c)

Fig.7

402

401

30

40

240

10

100

20

**Fig.8**

**Fig.9**

Fig.10

SC1    101a(101)    100a    101d(101)    101f(101)

101b(101)    101c(101)    101e(101)

*Fig.11*

Fig.12

SC2

30

100b

100

30

10

## Fig.13

# Fig.14

# Fig.15

*Fig.16*

## Fig.17

*Fig.18*

**Fig.19**

(a)

802   100b

(b)

902   100b

## Fig.20

## Fig.21

```
                    ┌──────────┐
                    │  START   │
                    └──────────┘
                          │
        ┌─────────────────────────────────┐
        │      OPERATION OF PIC IS         │  ~S1
        │         CONTROLLED               │
        └─────────────────────────────────┘
                          │
        ┌─────────────────────────────────┐
        │   TRANSMITTED THROUGH OR         │  ~S2
        │   REFLECTED BY LRG FILTER        │
        └─────────────────────────────────┘
                          │
        ┌─────────────────────────────────┐
        │  LIGHT TRANSMITTED THROUGH       │
        │    LRG FILTER IS CAPTURED        │  ~S3
        │  AND IMAGE DATA IS OUTPUT        │
        └─────────────────────────────────┘
                          │
        ┌─────────────────────────────────┐
        │    LIGHT IN STATE WITHOUT        │
        │    LRG FILTER IS CAPTURED        │  ~S4
        │  AND IMAGE DATA IS OUTPUT        │
        └─────────────────────────────────┘
                          │
        ┌─────────────────────────────────┐
        │  WAVELENGTH INFORMATION          │
        │    OF LIGHT IS DERIVED           │  ~S5
        │      FROM IMAGE DATA             │
        └─────────────────────────────────┘
                          │
                    ┌──────────┐
                    │   END    │
                    └──────────┘
```

# Fig.22

1A

# Fig.23

**Fig.24**

**Fig.25**

## Fig.26

## Fig.27

812

(a)

912

(b)

## Fig.28

(a)

(b)

## *Fig.29*

(a)

(b)

# *Fig.30*

(a)

(b)

*Fig.31*

## INTERNATIONAL SEARCH REPORT

| International application No. |
| --- |
| **PCT/JP2024/008100** |

| A. | CLASSIFICATION OF SUBJECT MATTER |
| --- | --- |

*G01M 11/00*(2006.01)i; *G02B 6/122*(2006.01)i; *H01S 5/0683*(2006.01)i
FI:  G01M11/00 T; G02B6/122; H01S5/0683

According to International Patent Classification (IPC) or to both national classification and IPC

| B. | FIELDS SEARCHED |
| --- | --- |

Minimum documentation searched (classification system followed by classification symbols)

G01M11/00-11/08; G02B6/00-6/54; H01S5/00-5/50; G01J3/00-3/52

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2020-507087 A (CARL ZEISS SMT GMBH) 05 March 2020 (2020-03-05) | 1-15 |
| A | JP 6-323955 A (CANON INC.) 25 November 1994 (1994-11-25) | 1-15 |
| A | WO 2021/161854 A1 (HAMAMATSU PHOTONICS K.K.) 19 August 2021 (2021-08-19) | 1-15 |
| A | US 2020/0132947 A1 (SAMSUNG ELECTRONICS CO., LTD.) 30 April 2020 (2020-04-30) | 1-15 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 April 2024** | **23 April 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/008100**

| Patent document cited in search report | | | Publication date (day/month/year) | Patent family member(s) | | | Publication date (day/month/year) |
|---|---|---|---|---|---|---|---|
| JP | 2020-507087 | A | 05 March 2020 | US | 2019/0339327 | A1 | |
| | | | | WO | 2018/138249 | A1 | |
| | | | | DE | 102017101626 | A1 | |
| JP | 6-323955 | A | 25 November 1994 | (Family: none) | | | |
| WO | 2021/161854 | A1 | 19 August 2021 | US | 2023/0066638 | A1 | |
| | | | | US | 2023/0058064 | A1 | |
| | | | | US | 2023/0061667 | A1 | |
| | | | | WO | 2021/161684 | A1 | |
| | | | | WO | 2021/161986 | A1 | |
| | | | | EP | 4067842 | A1 | |
| | | | | EP | 4067843 | A1 | |
| | | | | EP | 4086597 | A1 | |
| | | | | CN | 115104002 | A | |
| | | | | KR | 10-2022-0137616 | A | |
| | | | | TW | 202140992 | A | |
| | | | | TW | 202140993 | A | |
| | | | | TW | 202200972 | A | |
| | | | | CN | 115087849 | A | |
| | | | | CN | 115104000 | A | |
| | | | | KR | 10-2022-0137615 | A | |
| | | | | KR | 10-2022-0137629 | A | |
| | | | | JP | 2023-169165 | A | |
| US | 2020/0132947 | A1 | 30 April 2020 | KR | 10-2020-0047833 | A | |
| | | | | CN | 111090038 | A | |

Form PCT/ISA/210 (patent family annex) (July 2022)

**REFERENCES CITED IN THE DESCRIPTION**

**Patent documents cited in the description**

- JP 2022058070 A